(19) Europäisches Patentamt
European Patent Office
Office européen des brevets

(11) **EP 3 564 863 B1**

(12) **EUROPEAN PATENT SPECIFICATION**

(45) Date of publication and mention
of the grant of the patent:
**13.03.2024 Bulletin 2024/11**

(21) Application number: **16925613.8**

(22) Date of filing: **30.12.2016**

(51) International Patent Classification (IPC):
**G06N 3/0442** *(2023.01)* **G06N 3/063** *(2023.01)*
**G06N 3/048** *(2023.01)*

(52) Cooperative Patent Classification (CPC):
**G06N 3/063; G06N 3/0442; G06N 3/048;**
G06F 12/00

(86) International application number:
**PCT/CN2016/113493**

(87) International publication number:
**WO 2018/120016 (05.07.2018 Gazette 2018/27)**

(54) **APPARATUS FOR EXECUTING LSTM NEURAL NETWORK OPERATION, AND OPERATIONAL METHOD**

VORRICHTUNG ZUR AUSFÜHRUNG EINES BETRIEBS EINES NEURONALEN LSTM-NETZES UND BETRIEBSVERFAHREN

APPAREIL D'EXÉCUTION D'OPÉRATION DE RÉSEAU NEURONAL LSTM, ET PROCÉDÉ OPÉRATIONNEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.11.2019 Bulletin 2019/45**

(73) Proprietor: **Shanghai Cambricon Information Technology Co., Ltd**
**Beijing 100191 (CN)**

(72) Inventors:
• **CHEN, Yunji**
  **Shanghai 201203 (CN)**
• **CHEN, Xiaobing**
  **Shanghai 201203 (CN)**
• **LIU, Shaoli**
  **Shanghai 201203 (CN)**
• **CHEN, Tianshi**
  **Shanghai 201203 (CN)**

(74) Representative: **AWA Sweden AB**
**Box 5117**
**200 71 Malmö (SE)**

(56) References cited:
WO-A1-2016/210014    CN-A- 104 036 451
CN-A- 104 657 111     CN-A- 105 184 366
CN-A- 105 512 723     US-A- 5 742 782
US-A1- 2015 356 075   US-A1- 2016 034 812
US-A1- 2016 196 488

• **José Pedro ET AL: "FACULDADE DE ENGENHARIA DA UNIVERSIDADE DO PORTO FPGA implementation of a LSTM Neural Network", , 25 July 2016 (2016-07-25), XP055713492, Retrieved from the Internet: URL:https://repositorio-aberto.up.pt/bitst ream/10216/90359/2/138867.pdf**

## Description

## TECHNICAL FIELD

The present disclosure relates to the technical field of neural network operations, and more specifically to a device and an operation method for performing LSTM neural network operations.

## BACKGROUND

Long Short Term Memory Network (LSTM) is a time recursive neural network (RNN). LSTM is suitable for processing and predicting important events with very long intervals and delays in time series due to a unique structural design of the network itself. LSTM network exhibits better performances than traditional recursive neural networks, as it is suitable for learning from experiences so as to classify, process, and predict time series after a time of unknown-length between important events. At present, LSTM network is widely used in many fields such as speech recognition, video description, machine translation, and automatic music synthesis. At the same time, with the research on the LSTM network, the performance of LSTM network has been greatly improved, and it has attracted extensive attention in industrial and academia communities.

The operation of LSTM network involves a variety of algorithms, and its specific implementation devices mainly include the following two types:

One device that implements LSTM network operations is a general-purpose processor. This method supports the above algorithms by executing general-purpose instructions using a general-purpose register stack and general functional means. One of the disadvantages of this method is that the operation performance of a single general-purpose processor is relatively low and cannot be accelerated by means of the normal parallelism of the LSTM network operations per se. While this method is executed by a plurality of general-purpose processors in parallel, mutual communication among these processors becomes a performance bottleneck. In addition, the general-purpose processors need to decode artificial neural network operations into a series of operations and memory access instructions, and the processor's front-end decoding also has large power consumption overhead.

Another known method of supporting LSTM network operations is to use a graphics processing unit (GPU). The method performs the above algorithms by executing generic SIMD instructions using a general-purpose register stack and a general-purpose stream processing unit. Since GPU is an apparatus specifically designed to execute graphic and image operations and scientific computations, it does not provide dedicated support for the LSTM network, and a large amount of front-end decoding is still required to perform LSTM network operations, which would bring a lot of extra overhead. In addition, the GPU has only a small on-chip buffer, and relevant parameters used in the LSTM network need to be repeatedly transferred from outside of the chip, thus the off-chip bandwidth becomes a performance bottleneck as well.

WO 2016/210014 A1 relates to a memory bandwidth management for deep learning applications. Jose Pedro ET AL: "FPGA implementation of a LSTM Neural Network", 25 July 2016 (2016-07-25), relates to an FPGA implementation of a LSTM Neural Network.

It can be seen that, how to design and provide a device and a method for realizing high performance LSTM network operations with a small IO amount and a low overhead becomes a problem pressed for solution.

## SUMMARY

In view of the foregoing, the major object of the present disclosure lies in providing a device and a method for performing LSTM network operations, to solve at least one of the above described technical problems.

In order to achieve the above object, as one aspect, the present disclosure provides a device for performing LSTM neural network operations, in accordance with independent claim 1.

As another aspect, the present disclosure further provides a method for LSTM neural network operations, in accordance with independent claim 9.

## BRIEF DESCRIPTION OF THE DRAWINGS

For a more complete understanding of the present disclosure and its advantages, reference will now be made to the following descriptions in conjunction with the drawings, in which:

FIG. 1 illustrates an overall structural diagram of a device for performing LSTM network operations in accordance with an embodiment of the present disclosure;

FIG. 2 illustrates a diagram of a data processing module in the device for performing LSTM network operations in accordance with an embodiment of the present disclosure;

FIG. 3 illustrates a flowchart of a method for performing LSTM network operations in accordance with the present disclosure;

FIG. 4 illustrates a detailed flowchart of a data processing procedure in the method for performing LSTM network operations in accordance with an embodiment of the present disclosure.

## DETAILED DESCRIPTION

In order to make the object, technical solution and advantages of the present disclosure more apparent, the present disclosure will be further described in detail below with reference to the drawings in conjunction with specific embodiments thereof.

In the present specification, the following embodiments for describing the principle of the present disclosure are merely illustrative and should not be construed in any way as limiting the scope of the disclosure. The following description with reference to the drawings is provided to assist in a comprehensive understanding of the exemplary embodiments of the present disclosure as defined by the claims.

The following description includes various specific details to facilitate the understanding, but these details should be regarded as merely exemplary. Therefore, those of ordinary skill in the art should realize that various changes and modifications of the embodiments described herein can be made without departing from the scope of the present disclosure. In addition, descriptions of well-known functions and structures are omitted for clarity and conciseness. Moreover, same reference numerals are used for similar functions and operations throughout the drawings. In the present disclosure, the terms "comprise" and "contain" and derivatives thereof are intended to be inclusive but not limiting.

The device for performing LSTM network operations in the present disclosure can be applied to the following scenarios, including but not limited to: various electronic products such as data processing, robot, computer, printer, scanner, telephone, tablet, smart terminal, mobile phone, driving recorder, navigator, sensor, webcam, cloud server, camera, video camera, projector, watch, headset, mobile storage, and wearable apparatus; various transportations such as aircraft, ship, and vehicle; various household appliances such as television set, air conditioner, microwave oven, refrigerator, rice cooker, humidifier, washing machine, electric light, gas stove, and kitchen ventilator, as well as various medical equipment such as nuclear magnetic resonance imaging, B-ultrasound, and electrocardiograph.

Specifically, the present disclosure discloses a device for performing LSTM neural network operations, wherein, the device comprising:

a plurality of data buffer units arranged in parallel for buffering data, states and results required for the operations; and
a plurality of data processing modules arranged in parallel for acquiring input data as well as weights and biases required in operations from corresponding data buffer units, and performing the LSTM neural network operations, wherein the plurality of data processing modules have one-to-one correspondence with the data buffer units, and parallel operations are performed among the plurality of data processing modules..

Wherein, the data buffer units is further configured to buffer intermediate results calculated by the data processing modules, and import the weights and the biases from a direct memory access unit only once during the entire performance, without any further change on the weights and the biases.

Wherein, each of the data buffer units is written with weights and biases divided in correspondence with neurons of the LSTM neural network operations, wherein the number of the weight and the number of the biases in each of the data buffer units are the same, and each of the data buffer units is configured to acquire a complete set of input data.

Wherein, the data processing modules are configured to perform the LSTM neural network operations using vector point-multiplication means, vector addition means, vector summation means, and vector nonlinear function transformation means.

Wherein, the vector nonlinear function transformation means is configured to perform a function operation by a table lookup method.

Wherein, each of the data processing modules is configured to calculate vector values of a forget gate, an input gate, an output gate and a candidate state cell in the LSTM neutral network operations respectively for a vector operation, obtain an output value for each of the data processing modules from each of the vector values, and finally splice the output values for the data processing modules to obtain a final output value.

The present disclosure discloses a device for performing LSTM neutral network operations, comprising:

a direct memory access unit for acquiring data required for the LSTM neural network operations and instructions from an external address space outside the device, sending the instructions and data therein to an instruction buffer unit and a data buffer unit respectively, and writing the operation result back to the external address space from a data processing module or the data buffer unit;
the instruction buffer unit for buffering the instructions acquired by the direct memory access unit from the external address space and inputting the instructions to a controller unit;
the controller unit for reading the instructions from the instruction buffer unit and decoding the instructions into microinstructions, and for controlling the direct memory access unit for data IO operations, controlling the data processing module for relevant operations, and controlling the data buffer unit for data buffering and transmission,
a plurality of data buffer units arranged in parallel for buffering data, states and results required for the operations;
a plurality of data processing modules arranged in parallel for acquiring input data as well as weights and biases required in operations from corresponding data buffer units, performing the LSTM neural network operations, and inputting the operation results into the corresponding data buffer units or the direct memory access unit, wherein the plurality of data processing modules have one-to-one correspondence with the data buffer units, and parallel operations are performed among the plurality of data processing modules.

Preferably, the direct memory access unit, the instruction buffer unit, the controller unit, the plurality of data buffer units and the plurality of data processing modules are all implemented by hardware circuits.

Preferably, the data buffer units further buffer intermediate results calculated from the data processing modules, and import the weights and the biases from the direct memory access unit only once during the entire performance, without any further change on the weights and the biases.

Preferably, the plurality of data processing modules perform the LSTM neural network operations using vector point-multiplication means, vector addition means, vector summation means, and vector nonlinear function transformation means.

Preferably, the vector nonlinear function transformation means is configured to perform a function operation by a table lookup method.

Preferably, the plurality of data processing modules perform the parallel operations in the following manner:

step 1: writing respective data buffer units with weights and biases that are read from the designated external address space and are divided in correspondence to neurons of the LSTM neural network operations, wherein the number of the weights and the number of the biases in each of the data buffer units are the same, and each of the data buffer units acquires a complete set of input data; each data processing module divides weights and input data in the corresponding data buffer unit into several portions, wherein the number of weights or input data in each portion is the same as the number of operations in the vector operation unit in a corresponding single data processing module; weights and input data of one portion are sent to the corresponding data processing module each time, a partial sum is calculated, and then the previously obtained partial sum is fetched from the data buffer unit for a vector addition, obtaining a new partial sum, which is sent back to the data buffer unit, wherein an initial value of the partial sum is set with an bias value;

step 2: after all the input data in each of the data buffer units have been sent to the corresponding data processing module and processed once, the obtained partial sum is the net activation amount corresponding to the neuron, and the corresponding data processing module transforms the net activation amount of the neuron by a nonlinear function, i.e. a tanh or sigmoid function, to obtain an output value of the neuron;

step 3: repeating the above steps 1 to 2 using different weights and biases in this way, and calculating vector values of a forget gate, an input gate, an output gate and a candidate state cell in the LSTM neutral network operations respectively; wherein in one same data processing module, the process of calculating the partial sums uses vector operation instructions, and a parallel operation is employed among the data

step 4: determining, by each data processing module, whether the calculations of vector values of the current forget gate, input gate and candidate state cell have been completed, and if so, a calculation of a new state cell is performed, that is, the vector values of the old state cell and forget gate are sent to the data processing unit, subjected to the vector point-multiplication means to obtain a partial sum, and sent back to the data buffer unit; then the values of the candidate state cell and the input gate is sent to the data processing unit and subjected to the vector point-multiplication means to obtain another partial sum; the partial sum in the data buffer unit is sent to the data processing module, subjected to a vector summation sub-module to obtain an updated state cell, and sent back to the data buffer unit; and meanwhile the updated state cell in the data processing module is transformed by a nonlinear transformation function tanh; each of the data processing modules determines whether the calculation of a nonlinear transformation on the current updated data state cell and the calculation of the output gate are completed, and if so, the output gate and the nonlinear transformed vector of the updated data state cell are subjected to the vector point-multiplication means to calculate a final output value, which is written back to the data buffer unit; and

step 5: after having the output values in all the data processing modules written back to the data buffer units, splicing the output value for each of the different spaces to obtain a final output value, and sending it to the designated external address by the direct memory access unit.

The present disclosure also discloses a device for performing LSTM neural network operations, wherein, the device comprising:

a memory; and
a processor, configured to perform:

step 1: reading weights and biases for the LSTM neural network operations from a designated external address space, dividing the weights and biases into several portions corresponding to neurons of the LSTM neural network operations and then storing them into different spaces of the memory, wherein the number of the weights and the number of the biases in each of the spaces are the same; and reading input data for the LSTM neural network operations from the designated external address space and storing the input data in each of the different spaces of the memory;

step 2: dividing the weights and input data in each of the different spaces of the memory into several portions, wherein the number of the weights or the input data in each portion is the same as the number of operations in a corresponding vector operation unit; calculating a partial sum of the weight and the input data of one portion each time, which is then subjected to a vector addition with a previously obtained partial sum, to obtain a new partial sum, wherein an initial value of the partial sum is an bias value;

step 3: after all the input data in each of the different spaces of the memory are processed, the obtained partial sum is a net activation amount corresponding to the neuron, and the net activation amount of the neuron is transformed by a nonlinear function, i.e. a tanh or sigmoid function, to obtain an output value of the neuron;

step 4: repeating the above steps 1 to 3 in this way with different weights and biases, to calculate vector values of a forget gate, an input gate, an output gate and a candidate state cell in the LSTM neural network operations respectively, wherein the process of calculating the partial sum uses vector operation instructions, and the input data in each of the different spaces of the memory is calculated in a parallel operation manner;

step 5: determining whether the calculations of vector values of the current forget gate, input gate and candidate state cell in each of the different spaces of the memory have been completed, and if so, performing a calculation of a new state cell, that is, subjecting the vector values of the old state cell and forget gate to vector point-multiplication means to obtain a partial sum, and then subjecting values of the candidate state cell and the input gate to the vector point -multiplication means to obtain another partial sum, subjecting the two partial sums to a vector summation sub-module to obtain an updated state cell, and meanwhile subjecting the updated state cell to a nonlinear transformation function tanh for transformation; determining whether the calculation of a nonlinear transformation on the current updated data state cell and the calculation of the output gate are completed, and if so, subjecting the output gate and the nonlinear transformed vector of the updated data state cell to the vector point-multiplication means to calculate a final value for each of the different spaces of the memory; and

step 6: splicing the final output value for each of the different spaces of the memory to obtain a final output value.

The present disclosure also discloses a method for LSTM neural network operations, wherein, the method comprising:

step S1: reading weights and biases for the LSTM neural network operations from a designated external address space, writing the weights and the biases into a plurality of data buffer units arranged in parallel, and initializing the state cell of each data buffer unit; wherein the weights and the biases read from the designated external address space correspond to neurons of the LSTM neural network operations and are divided and sent to respective data buffer units, the number of the weights and the number of the biases in each data buffer unit are the same;

step S2, reading input data from the designated external address space and writing the input data to the plurality of data buffer units, wherein the input data written in each of the data buffer units is complete;

step S3, reading, by a plurality of data processing modules having one-to-one correspondence with the plurality of data buffer units arranged in parallel, the weights, the biases and the input data from corresponding data buffer units respectively, and performing the LSTM neutral network operations on the weights, the biases and the input data by use of vector point-multiplication means, vector addition means, vector summation means, and vector nonlinear function transformation means, to obtain an output value for each of the data processing modules respectively; and

step S4, splicing the output values for the data processing modules to obtain a final output value, i.e., a final result of the LSTM neural network operations.

Preferably, in the step S3, each of the data processing modules is configured to divide the weights and input data in the corresponding data buffer unit into several portions, wherein the number of the weights or input data in each portion is the same as the number of operations in a vector operation unit in a corresponding single data processing module, each of the data buffer unit is configured to send the weights and input data of one portion into the corresponding data processing module each time, to calculate a partial sum, then a previously obtained partial sum is fetched from the data buffer unit for a vector addition to obtain a new partial sum, which is sent back to the data buffer unit, wherein an initial value of the partial sum is an bias value;

after all the input data have been sent to the data processing module once, the obtained partial sum is a net activation amount corresponding to a neuron, which is then sent to the data processing module for obtaining an output value of the neuron by a nonlinear function transformation, i.e. a tanh or sigmoid function transformation, in a data operation sub-module; in this way with different weights and biases, vector values of a forget gate, an input gate, an output gate and a candidate state cell in the LSTM neural network can be calculated respectively; determining, by each data processing module, whether the calculations of vector values of current forget gate, input gate and candidate state cell have been completed, and if so, performing a calculation of a new state cell, that is, sending the vector values of the old state cell and forget gate to the data processing unit to obtain the partial sum by the vector point-multiplication means, where the partial sum is sent back to the data buffer unit, and then sending the values of the candidate state cell and the input gate to the data processing unit to obtain another partial sum by the vector point-multiplication means; sending the partial sum in the data buffer unit to the data processing module to obtain an updated state cell by the vector summation sub-module, which then is sent back to the data buffer unit; and meanwhile transforming the updated state cell in the data processing module by a nonlinear transformation function tanh; determining, by each data processing module, whether the calculation of a nonlinear transformation on a current updated data state cell and the calculation of the output gate are completed, and if so, subjecting the output gate and the nonlinear transformed vector of the updated data state cell to the vector point-multiplication means to calculate a final value, which is written back to the data buffer unit.

Preferably, the nonlinear function, i.e. the tanh or sigmoid function, is configured to perform a function operation by a table lookup method.

Other aspects, advantages, and prominent features of the present disclosure will become apparent to those skilled in the art, in accordance with the following detailed description on the exemplary embodiments of the present disclosure in conjunction with the accompanying drawings.

The present disclosure discloses a device and a method for LSTM network operations, which can be used to accelerate applications using LSTM network. The method specifically comprises the following steps.

(1) fetching weights and biases for the LSTM network operations from a designated external address space by a direct memory access unit, and writing the weights and biases into each of data buffer units, wherein the weights and biases are fetched from the designated external address space and then divided and sent to each of the data buffer units, the number of weights and the number of biases in each of the data buffer unit are the same, the weights and biases in each of the data buffer units correspond to the neurons; and initializing the state cells in the data buffer units;

(2) fetching the input data from the designated external address space by the direct memory access unit and writing the input data into the data buffer unit, where each of the data buffer units acquires a complete set of input data;

(3) dividing the weights and input data in each of the data buffer units into several portions, wherein the number of weights or input data in each portion is the same as the number of operations in the vector operation unit in the corresponding single data processing module, weights and input data of one portion are sent to the data processing module each time, to calculate a partial sum, and then the previously obtained partial sum is fetched from the data buffer unit for a vector addition to obtain a new partial sum, which is sent back to the data buffer unit, wherein an initial value of the partial sum is set with an bias value. After all the input data have been sent to the data processing module once, the obtained partial sum is the net activation amount corresponding to the neuron, which is then sent to the data processing module for obtaining an output value of the neuron by a nonlinear function transformation, i.e. a tanh or sigmoid function transformation, in the data operation sub-module. In this way with different weights and biases, vector values of a forget gate, an input gate, an output gate and a candidate state cell in the LSTM network can be calculated respectively. In the same data processing module, the process of calculating the partial sum uses vector operation instructions, and parallel operations are applied among data. Then, a data dependency determination sub-module in each data processing module can determine whether the calculations of vector values of the current forget gate, input gate and candidate state cell are completed, and if so, a calculation on a new state cell is performed. First, the old state cell and the forget gate vector value are sent to the data processing unit and subjected to the vector point-multiplication means in the data operation sub-module to obtain a partial sum, which is sent back to the data buffer unit; then the values of the candidate state cell and the input gate are sent to the data processing unit are subjected to the vector point-multiplication means in the data operation sub-module to obtain a partial sum, the partial sum in the data buffer unit is sent to the data processing module and subjected to the vector summation sub-module in the data operation sub-module to obtain an updated state cell, which is then sent back to the data buffer unit; and meanwhile the updated state cell in the data processing module is transformed by a nonlinear transformation function tanh in the data operation sub-module. The data dependency determination sub-module in each data processing module can determine whether the calculation of the nonlinear transformation on the current updated data state cell and the calculation of the output gate are completed, and if so, the output gate and the nonlinear transformed vector of the updated data state cell are subjected to the vector point-multiplication means in the data operation sub-module to calculate a final output value, which is written back to the data buffer unit. Throughout the process of the operations, no issues regarding data dependency or data confliction exist among different data processing modules, and the processing can be performed in parallel at all times.

(4) after having the output values in all the data processing modules written back to the data buffer units, splicing the output values in each of the data processing modules to obtain a final output value, and sending it to the designated external address by the direct memory access unit.

(5) determining whether the LSTM network needs to perform the output for a next timing. If so, the method proceeds to (2); otherwise, the method ends the operation.

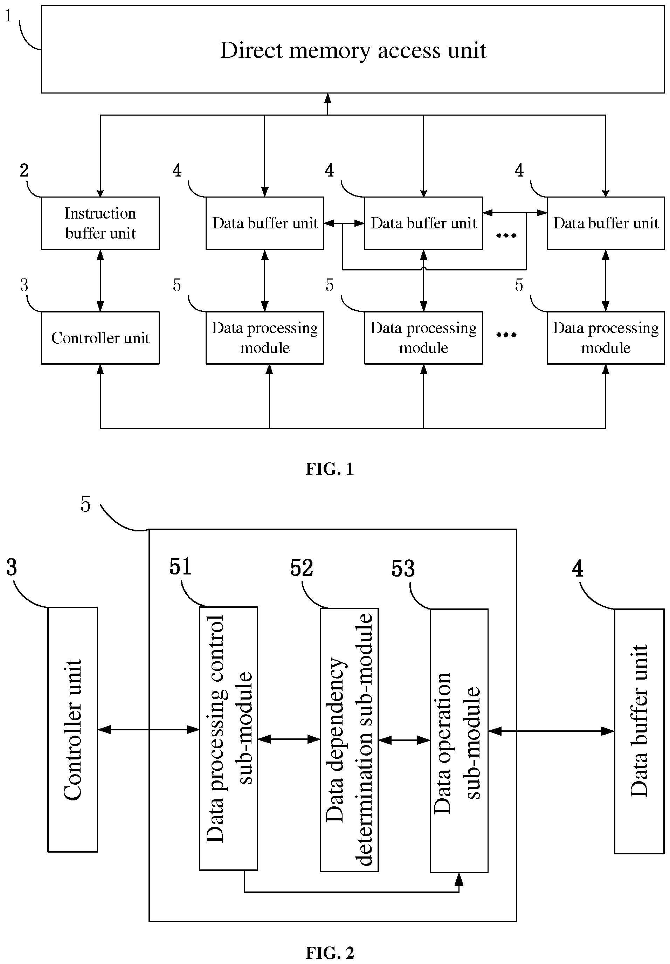

FIG. 1 illustrates an overall structural diagram of a device for performing LSTM network operations in accordance with an embodiment of the present disclosure. As shown in FIG. 1, the device includes a direct memory access unit 1, an instruction buffer unit 2, a controller unit 3, a data buffer unit 4, and a data processing module 5, all of which can be implemented by hardware circuits.

The direct memory access unit 1 can access an external address space, read/write data from/to each of the buffer units inside the device, and complete the loading and storage of data, which specifically include reading an instruction from the instruction buffer unit 2, reading weights, biases, and input data required for LSTM network operations from designated storage units to the data buffer unit 4, and directly writing a post-operation output to the designated external space from the data buffer unit 4.

The instruction buffer unit 2 reads the instruction through the direct memory access unit 1, and buffers the read instructions.

The controller unit 3 reads an instruction from the instruction buffer unit 2, decodes the instruction into microinstructions that control behaviors of other modules, and sends them to other modules such as the direct memory access unit 1, the data buffer unit 4, and the data processing module 5.

The data buffer unit 4 initializes an state cell of the LSTM at the time of device initialization, and reads weights and biases from a designated external address through the direct memory access unit 1, the weights and biases read in each data buffer unit 4 correspond to the neuron to be calculated, that is, the weights and biases read in each data buffer unit 4 are part of the total weights and biases, and the weights and biases in all data buffer units 4, after combination, are the weights and biases read from the designated external address; in the specific operations, an input data is first obtained from the direct memory access unit 1, with each data buffer unit 4 obtaining a copy of the input data, and a partial sum being initialized to an bias value; and then a part of the weights, biases and input values is sent to the data processing module 5; an intermediate value is calculated in the data processing module 5, which then is read from the data processing module 5 and saved into the data buffer unit 4. When all the inputs have been subjected to the operations once, the partial sum is input to the data processing module 5 to calculate an neuron output, which is then written back to the data buffer unit 4, and finally vector values of an input gate, an output gate, a forget gate and a candidate state cell are obtained. Then, the forget gate and the old state cell are sent to the data processing module 5 to calculate a partial sum and write it back to the data buffer unit 4; the candidate state cell and the input gate are sent to the data processing module 5 to calculate another partial sum; the partial sum in the data buffer unit 4 is written into the data processing module 5 and is subjected to a vector addition with the previously calculated partial sum to obtain the updated state cell, and the updated state cell is written back to the data buffer unit 4. The output gate is sent to the data processing module 5 and subjected to a vector point -multiplication with the transformed value by a nonlinear transformation function tanh of the updated state cell to obtain an output value, and the output value is written back to the data buffer unit 4. Finally, the corresponding updated state cell and the output value are obtained in each of the data buffer units 4, and the output values in all the data buffer units 4 are combined to be the final output value. Finally, each data buffer unit 4 writes the obtained final output value back to the designated external address space through the direct memory access unit 1.

The corresponding operations in LSTM network are as follows:

$$f_t = \sigma(W_f[h_{t-1}, x_t] + b_f);$$

$$i_t = \sigma(W_i[h_{t-1}, x_t] + b_i);$$

$$\widetilde{c}_t = \tanh(W_c[h_{t-1}, x_t] + b_c);$$

$$c_t = c_{t-1}\odot f_t + \widetilde{c}_t\odot i_t;$$

$$o_t = \sigma(W_o[h_{t-1}, x_t] + b_o);$$

$$h_t = o_t\odot\tanh(c_t);$$

Wherein, $x_t$ is the input data at a timing t, $h_{t-1}$ represents the output data at a timing t-1; $W_f$, $W_i$, $W_c$, and $W_o$ represent the weight vectors corresponding to the forget gate, the input gate, the updated state cell and the output gate respectively; $b_f$, $b_i$, $b_c$, and $b_o$ represent the biases corresponding to the forget gate, the input gate, the updated state cell and the output gate respectively; $f_t$ represents the output of the forget gate, which is subjected to a point -multiplication with the state cell at the timing t-1 to selectively forget values of past state cells; $i_t$ represents the output of the input gate, which is subjected to a point-multiplication with the candidate state value at the timing t to selectively add the candidate state value at the timing t into the state cell; $\widetilde{c}_t$ represents the candidate state value calculated at the timing t; $c_t$ represents a new state value obtained by selectively forgetting the state value at the timing t-1 and selectively adding the state value at the timing t, which will be used at the timing of the final output calculation and transmitted to the next timing; $o_t$ represents a selection condition which needs to be output as a resulted part by the state cell at the timing t; $h_t$ represents the output at the timing t, which is also sent to the next timing at the same time; $\odot$ is a product of vectors by elements; $\sigma$ is a sigmoid function, with a formula of $\sigma(x) = \frac{1}{1 - e^{-x}}$ ; and the formula of the activation function tanh is $\tanh(x) = \frac{e^x - e^{-x}}{e^x + e^{-x}}$ .

The data processing module 5 each time reads part of the weights $W_i/W_f/W_o/W_c$ and biases $b_i/b_f/b_o/b_c$ as well as the corresponding input data $[h_{t-1}, x_t]$ from the corresponding data buffer unit 4, completes a calculation on the partial sum by the vector-multiplication means and the summation means in the data processing module 5, until all the input data of each neuron have been operated once, and a net activation amounts $net_i/net_f/net_o/net_c$ of the neuron can be obtained. Then the calculation of the output values are completed by vector nonlinear function transformations with a sigmoid or tanh function, and the calculations on the input gate $i_i$, the forget gate $f_i$, the output gate $o_i$ and the candidate state cell $\widetilde{c}_t$ are completed respectively in this way. Then, the point-multiplication of the old state cell and the forget gate as well as that of the candidate state cell and the input gate are calculated respectively by the vector point-multiplication means in the data processing module 5, and the two results are subjected to an operation by the vector addition means to obtain a new state cell $c_t$. The newly obtained state cell is written back into the data buffer unit 4. The state cell in the data processing module 5 completes the transformation of the tanh function by the vector nonlinear function transformation means, so as to obtain $\tanh(c_t)$. In the calculation process, it can be completed by calculating the value of the tanh function or by a lookup table. Then, the output gate and the tanh nonlinear transformed vector of the state cell are subjected to the vector point-multiplication means to calculate the final neuron output value $h_t$. Finally, the neuron output value $h_t$ is written back to the data buffer unit 4.

FIG. 2 illustrates a diagram of a data processing module in the device for performing LSTM network operations in accordance with an embodiment of the present disclosure.

As shown in FIG. 2, the data processing unit 5 includes a data processing control sub-module 51, a data dependency determination sub-module 52, and a data operation sub-module 53.

Wherein, the data processing control sub-module 51 controls the operations performed by the data operation sub-module 53, and controls the data dependency determination sub-module 52 to determine whether or not the current operation has a data dependency. For part of the operations, the data processing control sub-module 51 controls the operations performed by the data operation sub-module 53; and for operations that may have data dependencies, the data processing control sub-module 51 first controls the data dependency determination sub-module 52 to determine whether the current operation has a data dependency. If so, the data processing control sub-module 51 inserts a null operation into the data operation sub-module 53 until the data dependency is released, and then controls the data operation sub-module 53 to perform a data operation.

The data dependency determination sub-module 52 is controlled by the data processing control sub-module 51 to check whether there is a data dependency in the data operation sub-module 53. If the next operation requires a value that has not been operated yet, then there is currently a data dependency, otherwise there is no data dependency. A method of data dependency detection is that, there are registers R1, R2, R3, R4, and R5 in the data operation sub-module 53, which are respectively used for indicating whether the input gate, the forget gate, the output gate, the candidate state cell and the tanh function transformation on the updated state cell are completed; a non-zero value of the register indicates that the operation is completed, and a zero indicates that the operation has not been completed. Corresponding to the LSTM network, the data dependency determination sub-module 52 determines the data dependency twice, i.e., determining whether there is data dependency among the input gate, the output gate and the candidate state cell when calculating the new state cell, and determining whether there is data dependency between the output gate and the tanh function transformation on the updated state cell when calculating the output value, respectively, by determining respectively whether R1, R3, and R4 are all non-zero and whether R2 and R5 are both non-zero. After the determination, the determination results need to be sent back to the data processing control sub-module 51.

The data operation sub-module 53 is controlled by the data processing control sub-module 51 to complete the data processing in the network operation procedure. The data operation sub-module 53 includes vector point-multiplication means, vector addition means, vector summation means, vector non-linear transformation means, and registers R1, R2, R3, R4, and R5 indicating whether or not the relevant data operations are completed. The registers R1, R2, R3, R4, and R5 are used for indicating whether the input gate, the forget gate, the output gate, the candidate state cell, and the tanh function transformation on the updated state cell are completed; a non-zero value of the register indicates that the operation is completed, and zero indicates that the operation has not been completed. Wherein, the vector addition means adds two vectors by their corresponding positions to obtain a vector, while the vector summation means divides the vector into several segments, and perform an internal summation for each segment, with the finally resulted vector having a length equal to the number of segments. The vector nonlinear transformation means takes each element in the vector as an input to obtain a nonlinear-function-transformed output. The specific nonlinear transformation can be done in two ways. Take the sigmoid function with an input x as an example, one method is to directly calculate sigmoid(x) by use of function operation; and the other method is to use a table lookup method, where the data operation sub-module 53 maintains a table of sigmoid functions which records values of outputs $y_1$, $y_2$. ..$y_n$ corresponding to inputs $x_1$, $x_2$ ... $x_n(x_1 < x_2 < \cdots < x_n)$, and to calculate the function values corresponding to x, an interval $[x_i,x_{i+1}]$ satisfying $x_i < x < x_{i+1}$ is firstly found, and $\frac{y_{i+1}-y_i}{x_{i+1}-x_i}(x - x_i) + y_i$ is calculated as the output value. For the LSTM network operation procedure, the following operations are performed:

First, R1, R2, R3, R4, and R5 are set to zero. A partial sum of the input gate is initialized with an bias; an temporary value is obtained by the vector point-multiplication means from the partial sum of input data and the weight corresponding to the input data, then the temporary value is segmented according to vectors of the temporary values corresponding to different neurons, the summation on the temporary values is completed by the vector summation means, and an update of the partial sum is completed with the calculation result and the input gate partial sum; take another set of input data and weight for the same operation to update the partial sum; after all the input data have been operated once, the resulting partial sum is the net activation amount of the neuron, and then the output value of the input gate is calculated by the vector nonlinear transformation means. The output value is written back into the data buffer unit 4 and the register R1 is set to non-zero.

The output values of the forget gate, the output gate, and the candidate state cell are calculated by the same method as that for calculating the output of the input gate, the corresponding output values are written back into the data buffer unit 4, and the registers R2, R3, and R4 are set to non-zero.

A null operation or an operation on the updated state cell is performed according to the control commands of the data processing control sub-module 51. The operation on the updated state cell is: fetching the output value of the forget gate and an old state cell from the data buffer unit 4, calculating a partial sum by the vector point-multiplication means, then fetching the output value of the input gate and the candidate state cell from the data buffer unit 4, calculating a partial sum by the vector point-multiplication means, which then is subjected to the vector addition means together with the previous partial sum of state cell to obtain the updated state cell. Finally, the last state cell is written back into the data buffer unit 4.

A null operation or an operation on the LSTM network output value is performed according to the control commands of the data processing control sub-module 51. The operation on the output value is: subjecting the updated state cell to the vector nonlinear function transformation means to calculate the nonlinear transformed value of the state cell, and then the R5 is set to non-zero. Then, a point-multiplication is performed on the output gate and the nonlinear transformed value of the state cell by the vector point-multiplication means, and the final output value is calculated as the output value of the corresponding neuron in the LSTM network. The output value is written back into the data buffer unit 4.

The device of the present disclosure operates using a specially designed instruction set, and the efficiency of instruction decoding is relatively high. Parallel calculations among the plurality of data processing modules and parallel operations among the plurality of data buffer units do not require data transmission, which greatly improves parallelism of these operations. In addition, putting weights and biases in the data buffer unit can reduce IO operations between the device and the external address space, which reduces the bandwidth required for memory access.

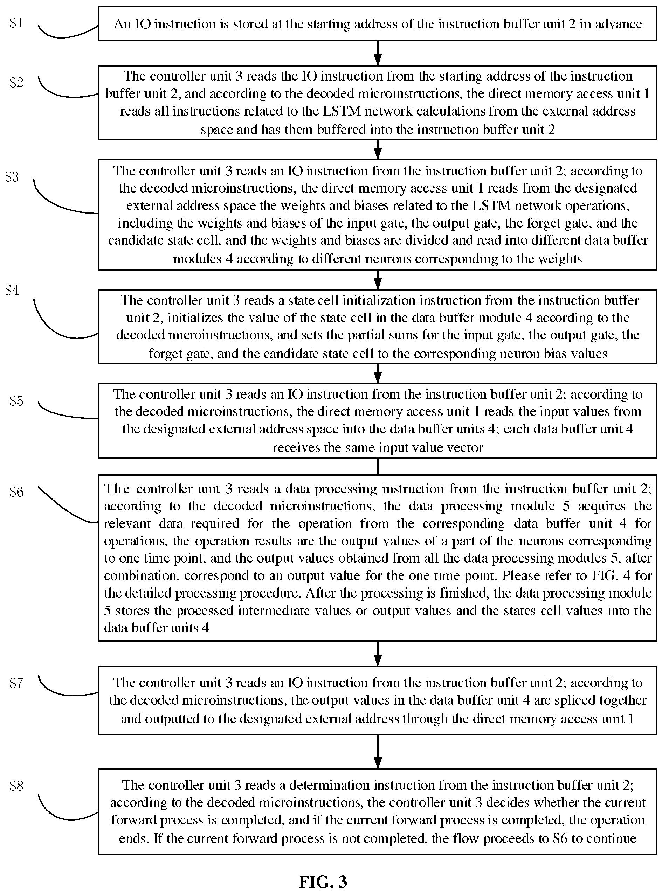

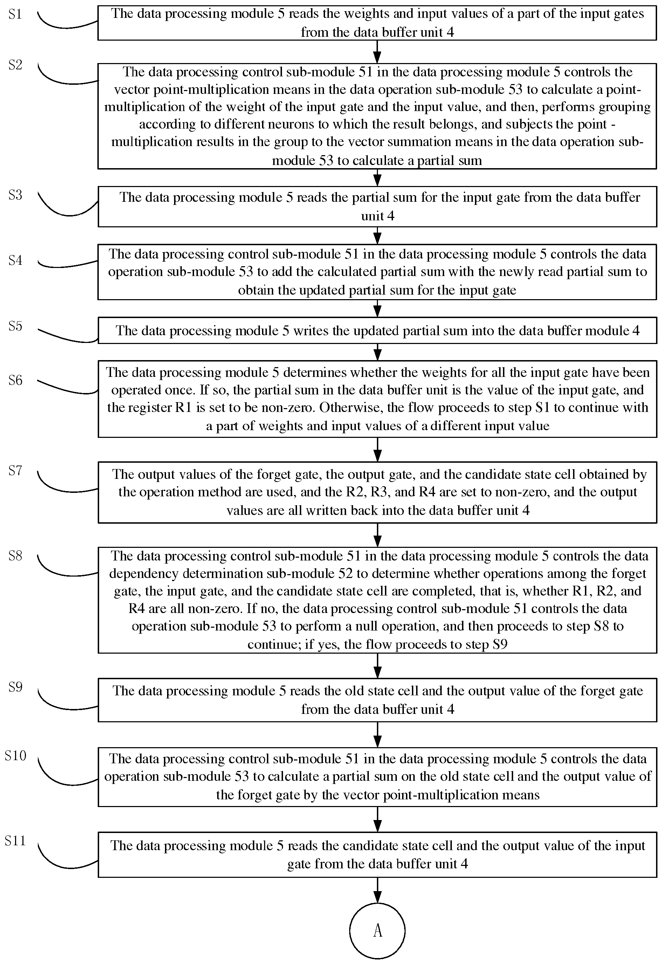

FIG. 3 illustrates a flowchart of performing LSTM network operations in accordance with the present disclosure.

In step S1, an IO instruction is stored at the starting address of the instruction buffer unit 2 in advance.

In step S2, the controller unit 3 reads the IO instruction from the starting address of the instruction buffer unit 2, and according to the decoded microinstructions, the direct memory access unit 1 reads all instructions related to the LSTM network calculations from the external address space and has them buffered into the instruction buffer unit 2.

In step S3, the controller unit 3 reads an IO instruction from the instruction buffer unit 2; according to the decoded microinstructions, the direct memory access unit 1 reads from the designated external address space the weights and biases related to the LSTM network operations, including the weights and biases of the input gate, the output gate, the forget gate, and the candidate state cell, and the weights and biases are divided and read into different data buffer modules 4 according to different neurons corresponding to the weights.

In step S4, the controller unit 3 reads a state cell initialization instruction from the instruction buffer unit 2, initializes the value of the state cell in the data buffer module 4 according to the decoded microinstructions, and sets the partial sums for the input gate, the output gate, the forget gate, and the candidate state cell to the corresponding neuron bias values.

In step S5, the controller unit 3 reads an IO instruction from the instruction buffer unit 2; according to the decoded microinstructions, the direct memory access unit 1 reads the input values from the designated external address space into the data buffer units 4; each data buffer unit 4 receives the same input value vector.

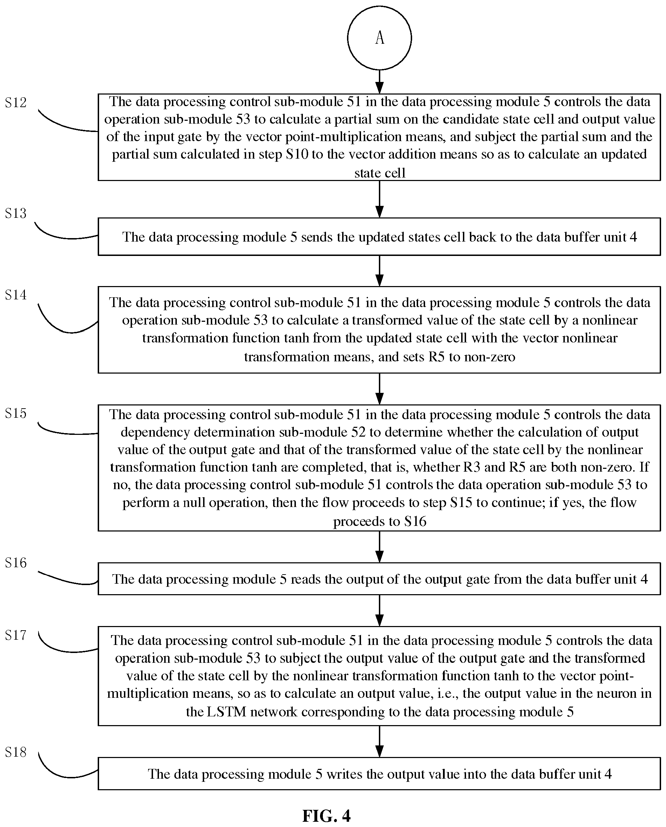

In step S6, the controller unit 3 reads a data processing instruction from the instruction buffer unit 2; according to the decoded microinstructions, the data processing module 5 acquires the relevant data required for the operation from the corresponding data buffer unit 4 for operations, the operation results are the output values of a part of the neurons corresponding to one time point, and the output values obtained from all the data processing modules 5, after combination, correspond to an output value for the one time point. Please refer to FIG. 4 for the detailed processing procedure. After the processing is finished, the data processing module 5 stores the processed intermediate values or output values and the states cell values into the data buffer units 4.

In step S7, the controller unit 3 reads an IO instruction from the instruction buffer unit 2; according to the decoded microinstructions, the output values in the data buffer unit 4 are spliced together and outputted to the designated external address through the direct memory access unit 1.

In step S8, the controller unit 3 reads a determination instruction from the instruction buffer unit 2; according to the decoded microinstructions, the controller unit 3 decides whether the current forward process is completed, and if the current forward process is completed, the operation ends. If the current forward process is not completed, the flow proceeds to S6 to continue.

FIG. 4 illustrates a detailed flowchart of a data processing procedure in a method for performing LSTM network operations in accordance with an embodiment of the present disclosure.

In step S1, the data processing module 5 reads the weights and input values of a part of the input gates from the data buffer unit 4.

In step S2, the data processing control sub-module 51 in the data processing module 5 controls the vector point-multiplication means in the data operation sub-module 53 to calculate a point-multiplication of the weight of the input gate and the input value, and then, performs grouping according to different neurons to which the result belongs, and subjects the point -multiplication results in the group to the vector summation means in the data operation sub-module 53 to calculate a partial sum.

In step S3, the data processing module 5 reads the partial sum for the input gate from the data buffer unit 4.

In step S4, the data processing control sub-module 51 in the data processing module 5 controls the data operation sub-module 53 to add the calculated partial sum with the newly read partial sum to obtain the updated partial sum for the input gate.

In step S5, the data processing module 5 writes the updated partial sum into the data buffer module 4.

In step S6, the data processing module 5 determines whether the weights for all the input gate have been operated once. If so, the partial sum in the data buffer unit is the value of the input gate, and the register R1 is set to be non-zero. Otherwise, the flow proceeds to step S1 to continue with a part of weights and input values of a different input value.

In step S7, the output values of the forget gate, the output gate, and the candidate state cell obtained by the operation method are used, and the R2, R3, and R4 are set to non-zero, and the output values are all written back into the data buffer unit 4.

In step S8, the data processing control sub-module 51 in the data processing module 5 controls the data dependency determination sub-module 52 to determine whether operations among the forget gate, the input gate, and the candidate state cell are completed, that is, whether R1, R2, and R4 are all non-zero. If no, the data processing control sub-module 51 controls the data operation sub-module 53 to perform a null operation, and then proceeds to step S8 to continue; if yes, the flow proceeds to step S9.

In step S9, the data processing module 5 reads the old state cell and the output value of the forget gate from the data buffer unit 4.

In step S10, the data processing control sub-module 51 in the data processing module 5 controls the data operation sub-module 53 to calculate a partial sum on the old state cell and the output value of the forget gate by the vector point-multiplication means.

In step S11, the data processing module 5 reads the candidate state cell and the output value of the input gate from the data buffer unit 4.

In step S12, the data processing control sub-module 51 in the data processing module 5 controls the data operation sub-module 53 to calculate a partial sum on the candidate state cell and output value of the input gate by the vector point-multiplication means, and subject the partial sum and the partial sum calculated in step S10 to the vector addition means so as to calculate an updated state cell.

In step S13, the data processing module 5 sends the updated states cell back to the data buffer unit 4.

In step S14, the data processing control sub-module 51 in the data processing module 5 controls the data operation sub-module 53 to calculate a transformed value of the state cell by a nonlinear transformation function tanh from the updated state cell with the vector nonlinear transformation means, and sets R5 to non-zero.

In step S15, the data processing control sub-module 51 in the data processing module 5 controls the data dependency determination sub-module 52 to determine whether the calculation of output value of the output gate and that of the transformed value of the state cell by the nonlinear transformation function tanh are completed, that is, whether R3 and R5 are both non-zero. If no, the data processing control sub-module 51 controls the data operation sub-module 53 to perform a null operation, then the flow proceeds to step S15 to continue; if yes, the flow proceeds to S16.

In step S16, the data processing module 5 reads the output of the output gate from the data buffer unit 4.

In step S17, the data processing control sub-module 51 in the data processing module 5 controls the data operation sub-module 53 to subject the output value of the output gate and the transformed value of the state cell by the nonlinear transformation function tanh to the vector point-multiplication means, so as to calculate an output value, i.e., the output value in the neuron in the LSTM network corresponding to the data processing module 5.

In step S18, the data processing module 5 writes the output value into the data buffer unit 4.

The processes or methods depicted in the foregoing drawings may be implemented by a processing logic including hardware (e.g., circuit, dedicated logic, etc.), firmware, software (e.g., software embodied in a non-transitory computer-readable medium), or combinations thereof. Although the processes or methods are described above in certain orders, it should be understood that some of the described operations can be performed in a different order. In addition, certain operations may be performed in parallel rather than sequentially.

The device and method for performing neural network operations of the present disclosure have the following beneficial effects over existing implementations:

1. By using external instructions for operation, the number of instructions required for operation is greatly reduced compared to existing implementations, such that the decoding overhead incurred when performing LSTM network operations is reduced;

2. As weights and biases for hidden layers will be reused during the LSTM network operations, weight and bias values are temporarily stored in the data buffer unit, such that the IO amount between the device and outside is reduced, and the overhead for data transmission is reduced accordingly;

3. The present disclosure is not limited to the application field of a specific LSTM network, but can be used in such fields as speech recognition, text translation, and music synthesis for its strong scalability;

4. The plurality of data processing modules in the device are completely parallel, and the internal components of the data processing module are partially parallel, which can make full use of parallelism of the LSTM network, and significantly improve operation speed of the LSTM network;

5. Preferably, the specific implementation of the vector nonlinear function transformation means can be performed by a table lookup method, and its efficiency is greatly improved compared to the conventional function operations.

The object, technical solution and beneficial effects of the present disclosure are further described in detail based on the above specific embodiments. It should be understood that the forgoing descriptions are merely specific embodiments of the present disclosure, and is not intended to limit the present disclosure.

**Claims**

1. A device for performing Long Short Term Memory, LSTM, neural network operations, comprising:

   a plurality of data buffer units (4) arranged in parallel for buffering data, states and results required for the LSTM neural network operations; and
   a plurality of data processing modules (5) arranged in parallel configured to obtain input data, weights and biases required for operations, from the corresponding data buffer units (4), to perform the LSTM neural network operations, wherein the plurality of data processing modules (5) correspond one-to-one to the data buffer units (4);
   the device being **characterized in that**
   each data processing module (5) comprises a data processing control sub-module (51), a data dependency determination sub-module (52) and a data operation sub-module (53);
   wherein the data operation sub-module (53) is configured to perform data operations;
   wherein the data processing control sub-module (51) is configured to control the data operations performed by the data operation sub-module (53) and control the data dependency determination sub-module (52) to determine whether or not a current operation has a data dependency;
   wherein the data operation sub-module (53) comprises registers R1, R2, R3, R4 and R5, respectively indicating whether an operation of an input gate, of an forget gate, of an output gate, of a candidate state cell and of a tanh function transformation on an updated state cell, is completed;

wherein a non-zero value of any of the registers R1, R2, R3, R4 and R5 indicates that the corresponding operation is completed and a zero value of the register indicates that the corresponding operation is not completed;

wherein the data dependency determination sub-module (52) is configured to determine whether there is data dependency in the data operation sub-module (53) twice, comprising:

    1) to determine whether there is data dependency among the input gate, the output gate, and the candidate state cell when calculating a new state cell, based on whether the values of the registers R1, R3, and R4 are all non-zero, and
    2) to determine whether there is data dependency between the output gate and the tanh function transformation on the updated state cell when calculating an output value, based on whether the values of the registers R2 and R5 are both non-zero.

2. The device of claim 1, further comprising a direct memory access (DMA) unit (1), an instruction buffer unit (2) and a controller unit (3), wherein

    the DMA unit (1) is configured to obtain instructions and data required for the LSTM neural network operations from an external address space, send the instructions and data to the instruction buffer unit and the data buffer units (4), respectively, and write operation results back to the external address space from the data processing modules (5) and the data buffer units (4);
    the instruction buffer unit (2) is configured to buffer instructions obtained by the DMA unit from the external address space, and input the instructions to the controller unit; and
    the controller unit (3) is configured to read the instructions from the instruction buffer unit and decode the instructions into microinstructions, control the DMA unit to perform a data IO operation, control the data processing modules (5) to perform operations, and control the data buffer units (4) to buffer and transmit the data.

3. The device of claim 1, wherein the data buffer units (4) are further configured to buffer intermediate results calculated by the data processing modules (5), and import the weights and biases from the DMA unit only once during an execution of the LSTM neural network operations without any further change on the weights and the biases.

4. The device of claim 1, wherein the data processing modules (5) use a vector dot product component, a vector addition component, a vector summation component, and a vector nonlinear function conversion component to perform the LSTM neural network operations.

5. The device of claim 4, wherein the vector nonlinear function conversion component performs a function operation by looking up a table.

6. The device of any one of claims 2-5, wherein each of the data processing modules (5) is configured to divide the weights and the input data in the corresponding data buffer units (4) into several portions, wherein a number of weights or input data of each portion is equal to a number of operations of vector operation units of the corresponding data processing modules (5); and

    the controller unit is further configured to send a portion of weights and input data from the data buffer units (4) to the corresponding data processing modules (5) to obtain a partial sum by calculating, and retrieve the obtained partial sum from the data buffer units (4) and then send to the data processing modules (5), so that the data processing modules (5) can perform a vector addition on the partial sum to obtain a new partial sum; and then the controller unit is further configured to send the new partial sum to the data buffer units (4), wherein an initial value of the partial sum is a bias value;
    after all the input data have been sent to the data processing module (5) once, the obtained partial sum is a net activation amount corresponding to a neuron, which is then sent to the data processing module (5) for obtaining an output value of the neuron by a nonlinear function transformation, i.e. a tanh or sigmoid function transformation, in a data operation sub-module; such that by using different weights and biases, vector values of the forget gate, the input gate, the output gate and the candidate state cell in the LSTM neural network can be calculated respectively; each data processing module (5) is configured to determine whether the calculations of vector values of a current forget gate, input gate and candidate state cell have been completed, and if so, perform a calculation of the new state cell, that is, send the vector values of the previous state cell and forget gate to the data processing unit to obtain the partial sum by the vector point-multiplication means, where the partial sum is sent back to the data buffer unit (4), and then send the values of the candidate state cell and the input gate to the data processing unit to obtain another partial sum by the vector point-multiplication means; send the partial sum in the data buffer unit (4) to the data processing module (5) to obtain an updated state cell by the vector summation sub-module, which then is sent back to the data buffer unit (4); and meanwhile transform the updated state cell in the data processing module (5) by a nonlinear transformation function tanh; each data processing module (5) is configured to determine whether the calculation of a nonlinear transformation on a current updated data state cell and the calculation of the output gate are completed, and if so, subject the output gate and the nonlinear transformed vector of the updated data state cell to the vector point-multiplication means to calculate a final value, which is written back to the data buffer unit (4).

7. The device of claim 1, wherein each of the data processing modules (5) performs a vector operation by calculating vector values of the forget gate, the input gate, the output gate, and the candidate state cell in the LSTM network operation, and then obtains an output value of each data processing module (5) according to the vector values, and finally splices the output values of the data processing modules (5) to obtain a final output value.

8. The device of claim 1, wherein if a next operation requires a value of an operation that is not completed, it is determined that there is data dependency, otherwise it is determined that there is no data dependency.

9. An operation method of a Long Short Term Memory, LSTM, neural network, applied to an LSTM neural network operation device, wherein the LSTM neural network operations device includes a plurality of data buffer units (4) arranged in parallel and a plurality of data processing modules (5) corresponding one-to-one to the data buffer units (4), wherein each data processing module (5) comprises a data processing control sub-module (51), a data dependency determination sub-module (52) and a data operation sub-module (53); and wherein the data operation sub-module (53) comprises registers R1, R2, R3, R4 and R5, respectively indicating whether an operation of an input gate, of an forget gate, of an output gate, of a candidate state cell and of a tanh function transformation on an updated state cell, is completed; wherein a non-zero value of any of the registers R1, R2, R3, R4 and R5 indicates that the corresponding operation is completed and a zero value of the register indicates that the corresponding operation is not completed; the operation method comprising:

obtaining, by a target data processing module, input data, weights and biases required for operations, from the corresponding data buffer units (4), to perform the LSTM neural network operations;
buffering operation results to the corresponding data buffer units (4); wherein the target data processing module is any one of the data processing modules (5);
the method further comprising:

the data operation sub-module (53) performing data operations;
the data processing control sub-module (51) controlling the data operations performed by the data operation sub-module (53) and controlling the data dependency determination sub-module (52) to determine whether or not a current operation has a data dependency;
the data dependency determination sub-module (52) determining whether there is data dependency in the data operation sub-module (53) twice, comprising:

1) determining whether there is data dependency among the input gate, the output gate, and the candidate state cell when calculating a new state cell, based on whether the values of the registers R1, R3, and R4 are all non-zero, and
2) determining whether there is data dependency between the output gate and the tanh function transformation on the updated state cell when calculating an output value, based on whether the values of the registers R2 and R5 are both non-zero.

10. The operation method of claim 9, wherein the LSTM neural network operations device further includes a DMA unit (1), an instruction buffer unit (2) and a controller unit (3), and the operation method further includes:

obtaining, by the DMA unit (1), instructions and data required for the LSTM neural network operations from an external address space; transmitting, by the DMA unit, the instructions and data to the instruction buffer unit and the data buffer units (4), respectively;
reading, by the controller unit (3), the instructions from the instruction buffer unit; decoding, by the controller unit, the instructions into micro instructions; controlling, by the controller unit, the DMA unit to perform a data IO operation; controlling, by the controller unit, the data processing modules (5) to perform operations; and controlling, by the controller unit, the data buffer units (4) for caching and transmitting the data; and

writing, by the DMA unit (1), operation results back to the external address space from the data processing modules (5) and the data buffer units (4).

11. The operation method of claim 9, further comprising:

buffering, by the data buffer units (4), intermediate results computed by the data processing modules (5); and

importing, by the data buffer units (4), the weights and biases from the DMA unit only once during an execution of the LSTM neural network operations without any further change on the weights and the biases.

12. The operation method of claim 9, wherein the data processing modules (5) use a vector dot product component, a vector addition component, a vector summation component, and a vector nonlinear function conversion component to perform the LSTM neural network operations.

13. The operation method of claim 12, wherein the vector nonlinear function conversion component performs a function operation by looking up a table.

14. The operation method of any one of claims 10-13, further comprising:

dividing, by each of the data processing modules (5), the weights and the input data in the corresponding data buffer units (4) into several portions, wherein a number of weights or input data of each portion is equal to a number of operations of vector operation units of the corresponding data processing modules (5); and sending, by the controller unit, a portion of weights and input data from the data buffer units (4) to the corresponding data processing modules (5) to obtain a partial sum by computing; retrieving, by the controller unit, the obtained partial sum from the data buffer units (4) and then sending to the data processing modules (5), so that the data processing modules (5) can perform a vector addition on the partial sum to obtain a new partial sum; and sending, by the controller unit, the new partial sum to the data buffer units (4), wherein an initial value of the partial sum is a bias value; after all the input data have been sent to the data processing module (5) once, the obtained partial sum is a net activation amount corresponding to a neuron, which is then sent to the data processing module (5) for obtaining an output value of the neuron by a nonlinear function transformation, i.e. a tanh or sigmoid function transformation, in a data operation sub-module; such that by using different weights and biases, vector values of the forget gate, the input gate, the output gate and the candidate state cell in the LSTM neural network can be calculated respectively; each data processing module (5) determining whether the calculations of vector values of a current forget gate, input gate and candidate state cell have been completed, and if so, performing a calculation of a new state cell, that is, sending the vector values of the previous state cell and forget gate to the data processing unit to obtain the partial sum by the vector point-multiplication means, where the partial sum is sent back to the data buffer unit (4), and then sending the values of the candidate state cell and the input gate to the data processing unit to obtain another partial sum by the vector point-multiplication means; sending the partial sum in the data buffer unit (4) to the data processing module (5) to obtain an updated state cell by the vector summation sub-module, which then is sent back to the data buffer unit (4); and meanwhile transforming the updated state cell in the data processing module (5) by a nonlinear transformation function tanh; each data processing module (5) determining whether the calculation of a nonlinear transformation on a current updated data state cell and the calculation of the output gate are completed, and if so, subjecting the output gate and the nonlinear transformed vector of the updated data state cell to the vector point-multiplication means to calculate a final value, which is written back to the data buffer unit (4).

15. The operation method of claim 9, further comprising performing, by each of the data processing modules (5), a vector operation by calculating vector values of the forget gate, the input gate, the output gate, and the candidate state cell in the LSTM network operation; obtaining, by each of the data processing modules (5), an output value of each data processing module (5) according to the vector values; and splicing, by each of the data processing modules (5), the output values of the data processing modules (5) to obtain a final output value.

16. The operation method of claim 9, wherein if a next operation requires a value of an operation that is not completed, it is determined that there is data dependency, otherwise it is determined that there is no data dependency.

**Patentansprüche**

1. Vorrichtung zur Vornahme von Betrieben eines neuronalen Long Short Term Memory-, LSTM-, Netzes, umfassend:

eine Vielzahl von Datenpuffereinheiten (4), die parallel angeordnet sind, zum Puffern von Daten, Zuständen und Ergebnissen, die für die Betriebe des neuronalen LSTM-Netzes erforderlich sind; und
eine Vielzahl von Datenverarbeitungsmodulen (5), die parallel angeordnet sind und dafür eingerichtet sind, um Eingabedaten, Gewichte und Bias, die für die Betriebe notwendig sind, von den entsprechenden Datenpuffereinheiten (4) zu erhalten, um die Betriebe des neuronalen LSTM-Netzes vorzunehmen, wobei die Vielzahl von Datenverarbeitungsmodulen (5) eins zu eins den Datenpuffereinheiten (4) entspricht;
wobei die Vorrichtung **dadurch gekennzeichnet ist, dass**
jedes Datenverarbeitungsmodul (5) ein Datenverarbeitungs-Steuersubmodul (51), ein Datenabhängigkeits-Bestimmungssubmodul (52) und ein Datenbetriebs-Submodul (53) umfasst;
wobei das Datenbetriebs-Submodul (53) dafür eingerichtet ist, um Datenbetriebe vorzunehmen;
wobei das Datenverarbeitungs-Steuersubmodul (51) dafür eingerichtet ist, um die Datenbetriebe zu steuern, die von dem Datenbetriebs-Submodul (53) vorgenommen werden, und das Datenabhängigkeits-Bestimmungssubmodul (52) zu steuern, um zu bestimmen, ob ein aktueller Betrieb eine Datenabhängigkeit aufweist oder nicht;
wobei das Datenbetriebs-Submodul (53) Register R1, R2, R3, R4 und R5 umfasst, die jeweils anzeigen, ob ein Betrieb eines Eingangsgates, eines Vergessgates, eines Ausgangsgates, einer Kandidatenzustandszelle und einer tanh-Funktionstransformation an einer aktualisierten Zustandszelle vollendet ist;
wobei ein Nicht-Null-Wert irgendeines der Register R1, R2, R3, R4 und R5 anzeigt, dass der entsprechende Betrieb vollendet ist, und ein Null-Wert des Registers anzeigt, dass der entsprechende Betrieb nicht vollendet ist;
wobei das Datenabhängigkeits-Bestimmungssubmodul (52) dafür eingerichtet ist, um zweimal zu bestimmen, ob eine Datenabhängigkeit in dem Datenbetriebs-Submodul (53) vorhanden ist, umfassend:

1) zu bestimmen, ob eine Datenabhängigkeit unter dem Eingangsgate, dem Ausgangsgate und der Kandidatenzustandszelle vorhanden ist, wenn eine neue Zustandszelle berechnet wird, basierend darauf, ob die Werte der Register R1, R3 und R4 alle nicht Null sind, und
2) zu bestimmen, ob eine Datenabhängigkeit zwischen dem Ausgangsgate und der tanh-Funktionstransformation an der aktualisierten Zustandszelle vorhanden ist, wenn ein Ausgangswert berechnet wird, basierend darauf, ob die Werte der Register R2 und R5 beide nicht Null sind.

2. Vorrichtung nach Anspruch 1, ferner umfassend eine Einheit (1) mit direktem Speicherzugriff (DMA), eine Instruktionspuffereinheit (2) und eine Steuereinheit (3), wobei

die DMA-Einheit (1) dafür eingerichtet ist, um Instruktionen und Daten, die für die Betriebe des neuronalen LSTM-Netzes erforderlich sind, von einem externen Adressraum zu erhalten, die Instruktionen und Daten jeweils an die Instruktionspuffereinheit und die Datenpuffereinheiten (4) zu senden, und Betriebsergebnisse in den externen Adressraum von den Datenverarbeitungsmodulen (5) und den Datenpuffereinheiten (4) zurückzuschreiben;
die Instruktionspuffereinheit (2) dafür eingerichtet ist, um Instruktionen zu puffern, die durch die DMA-Einheit von dem externen Adressraum erhalten werden, und die Instruktionen in die Steuereinheit einzugeben; und
die Steuereinheit (3) dafür eingerichtet ist, um die Instruktionen aus der Instruktionspuffereinheit zu lesen und die Instruktionen in Mikroinstruktionen zu decodieren, die DMA-Einheit zu steuern, einen Daten-IO-Betrieb vorzunehmen, die Datenverarbeitungsmodule (5) zu steuern, Betriebe vorzunehmen, und die Datenpuffereinheiten (4) zu steuern, die Daten zu puffern und zu übertragen.

3. Vorrichtung nach Anspruch 1, wobei die Datenpuffereinheiten (4) ferner dafür eingerichtet sind, um Zwischenergebnisse zu puffern, die von den Datenverarbeitungsmodulen (5) berechnet werden, und die Gewichte und Bias von der DMA-Einheit nur einmal während einer Ausführung der Betriebe des neuronalen LSTM-Netzes ohne jede weitere Änderung an den Gewichten und Bias zu importieren.

4. Vorrichtung nach Anspruch 1, wobei die Datenverarbeitungsmodule (5) eine Vektorpunktproduktkomponente, eine Vektoradditionskomponente, eine Vektorsummationskomponente und eine nicht lineare Vektorfunktionsumwandlungskomponente verwenden, um die Betriebe des neuronalen LSTM-Netzes vorzunehmen.

**5.** Vorrichtung nach Anspruch 4, wobei die nicht lineare Vektorfunktionsumwandlungskomponente einen Funktionsbetrieb durch Nachschlagen in einer Tabelle vornimmt.

**6.** Vorrichtung nach einem der Ansprüche 2 bis 5, wobei jedes der Datenverarbeitungsmodule (5) dafür eingerichtet ist, um die Gewichte und die Eingangsdaten in den entsprechenden Datenpuffereinheiten (4) in einige Abschnitte zu teilen, wobei eine Anzahl von Gewichten oder Eingangsdaten jedes Abschnitts gleich ist einer Anzahl von Betrieben von Vektorbetriebseinheiten der entsprechenden Datenverarbeitungsmodule (5); und

die Steuereinheit ferner dafür eingerichtet ist, um einen Abschnitt von Gewichten und Eingangsdaten von den Datenpuffereinheiten (4) an die entsprechenden Datenverarbeitungsmodule (5) zu senden, um durch Berechnen eine Teilsumme zu erhalten, und die erhaltene Teilsumme aus den Datenpuffereinheiten (4) abzurufen und dann an die Datenverarbeitungsmodule (5) zu senden, so dass die Datenverarbeitungsmodule (5) eine Vektoraddition an der Teilsumme vornehmen können, um eine neue Teilsumme zu erhalten; und dann die Steuereinheit ferner dafür eingerichtet ist, um die neue Teilsumme an die Datenpuffereinheiten (4) zu senden, wobei ein Initialwert der Teilsumme ein Biaswert ist;

nachdem alle Eingangsdaten einmal an die Datenverarbeitungsmodule (5) gesendet wurden, die erhaltene Teilsumme ein Nettoaktivierungsbetrag ist, der einem Neuron entspricht und der dann an das Datenverarbeitungsmodul (5) gesendet wird, um einen Ausgangswert des Neurons durch eine nicht lineare Funktionstransformation, d.h. eine tanh-oder Sigmoid-Funktionstransformation, in einem Datenbetriebs-Submodul zu erhalten; so dass, unter Verwendung verschiedener Gewichte und Bias, Vektorwerte des Vergessgates, des Eingangsgates, des Ausgangsgates und der Kandidatenzustandszelle in dem neuronalen LSTM-Netz jeweils berechnet werden können;

jedes Datenverarbeitungsmodul (5) dafür eingerichtet ist, um zu bestimmen, ob die Berechnungen von Vektorwerten eines aktuellen Vergessgates, Eingangsgates und einer Kandidatenzustandszelle vollendet wurden, und wenn ja, eine Berechnung der neuen Zustandszelle vorzunehmen, das heißt, die Vektorwerte der vorherigen Zustandszelle und des Vergessgates an die Datenverarbeitungseinheit zu senden, um die Teilsumme durch die Vektorpunktmultiplikationsmittel zu erhalten, wo die Teilsumme an die Datenpuffereinheit (4) zurückgesendet wird, und dann die Werte der Kandidatenzustandszelle und des Eingangsgates an die Datenverarbeitungseinheit zu senden, um eine weitere Teilsumme durch die Vektorpunktmultiplikationsmittel zu erhalten; die Teilsumme in der Datenpuffereinheit (4) an das Datenverarbeitungsmodul (5) zu senden, um eine aktualisierte Zustandszelle durch das Vektorsummations-Submodul zu erhalten, die dann an die Datenpuffereinheit (4) zurückgesendet wird; und dabei die aktualisierte Zustandszelle in dem Datenverarbeitungsmodul (5) durch eine nicht lineare Transformationsfunktion tanh zu transformieren; wobei jedes Datenverarbeitungsmodul (5) dafür eingerichtet ist, um zu bestimmen, ob die Berechnung einer nicht linearen Transformation an einer aktuellen aktualisierten Datenzustandszelle und die Berechnung des Ausgangsgates vollendet sind, und wenn ja, das Ausgangsgate und den nicht linearen transformierten Vektor der aktualisierten Datenzustandszelle den Vektorpunktmultiplikationsmittels auszusetzen, um einen Endwert zu berechnen, der in die Datenpuffereinheit (4) zurückgeschrieben wird.

**7.** Vorrichtung nach Anspruch 1, wobei jedes der Datenverarbeitungsmodule (5) einen Vektorbetrieb durch die Berechnung von Vektorwerten des Vergessgates, des Eingangsgates, des Ausgangsgates und der Kandidatenzustandszelle in dem Betriebe des LSTM-Netzes vornimmt, und dann einen Ausgangswert jedes Datenverarbeitungsmoduls (5) gemäß den Vektorwerten erhält, und schließlich die Ausgangswerte der Datenverarbeitungsmodule (5) spleißt, um einen Endausgangswert zu erhalten.

**8.** Vorrichtung nach Anspruch 1, wobei, wenn ein nächster Betrieb einen Wert eines Betriebs erfordert, der nicht vollendet ist, bestimmt wird, dass eine Datenabhängigkeit vorhanden ist, und ansonsten bestimmt wird, dass keine Datenabhängigkeit vorhanden ist.

**9.** Betriebsverfahren eines neuronalen Long Short Term Memory-, LSTM-, Netzes, welches bei einer Betriebsvorrichtung eines neuronalen LSTM-Netzes angewendet wird, wobei die Betriebsvorrichtung des neuronalen LSTM-Netzes eine Vielzahl von Datenpuffereinheiten (4), die parallel angeordnet sind, und eine Vielzahl von Datenverarbeitungsmodulen (5), die eins zu eins den Datenpuffereinheiten (4) entsprechen, umfasst, wobei jedes Datenverarbeitungsmodul (5) ein Datenverarbeitungs-Steuersubmodul (51), ein Datenabhängigkeits-Bestimmungssubmodul (52) und ein Datenbetriebs-Submodul (53) umfasst; und wobei das Datenbetriebs-Submodul (53) Register R1, R2, R3, R4 und R5 umfasst, die jeweils anzeigen, ob ein Betrieb eines Eingangsgates, eines Vergessgates, eines Ausgangsgates, einer Kandidatenzustandszelle und einer tanh-Funktionstransformation an einer aktualisierten Zustandszelle vollendet ist; wobei ein Nicht-Null-Wert irgendeines der Register R1, R2, R3, R4 und R5 anzeigt, dass der entsprechende Betrieb vollendet ist, und ein Null-Wert des Registers anzeigt, dass der entsprechende Betrieb nicht vollendet ist; wobei das Betriebsverfahren umfasst:

Erhalten, durch ein Zieldatenverarbeitungsmodul, von Eingangsdaten, Gewichten und Bias, die für Betriebe erforderlich sind, von den entsprechenden Datenpuffereinheiten (4), um die Betriebe des neuronalen LSTM-Netzes vorzunehmen;
Puffern von Betriebsergebnissen in den entsprechenden Datenpuffereinheiten (4);
wobei das Zieldatenverarbeitungsmodul irgendeines der Datenverarbeitungsmodule (5) ist;
wobei das Verfahren ferner umfasst:

das Datenbetriebs-Submodul (53) nimmt Betriebe vor;
das Datenverarbeitungs-Steuersubmodul (51) steuert die Datenbetriebe, die von dem Datenbetriebs-Submodul (53) vorgenommen werden, und
Steuern des Datenabhängigkeits-Bestimmungssubmoduls (52),um zu bestimmen, ob ein aktueller Betrieb eine Datenabhängigkeit aufweist oder nicht;
das Datenabhängigkeits-Bestimmungssubmodul (52) bestimmt zweimal, ob eine Datenabhängigkeit in dem Datenbetriebs-Submodul (53) vorhanden ist, umfassend:

1) zu bestimmen, ob eine Datenabhängigkeit unter dem Eingangsgate, dem Ausgangsgate und der Kandidatenzustandszelle vorhanden ist, wenn eine neue Zustandszelle berechnet wird, basierend darauf, ob die Werte der Register R1, R3 und R4 alle nicht Null sind, und
2) zu bestimmen, ob eine Datenabhängigkeit zwischen dem Ausgangsgate und der tanh-Funktionstransformation an der aktualisierten Zustandszelle vorhanden ist, wenn ein Ausgangswert berechnet wird, basierend darauf, ob die Werte der Register R2 und R5 beide nicht Null sind.

10. Betriebsverfahren nach Anspruch 9, wobei die Betriebsvorrichtung des neuronale LSTM-Netzes ferner eine DMA-Einheit (1), eine Instruktionspuffereinheit (2) und eine Steuereinheit (3) umfasst, und das Betriebsverfahren ferner umfasst:

Erhalten, durch die DMA-Einheit (1), von Instruktionen und Daten, die für die Betriebe des neuronalen LSTM-Netzes erforderlich sind, von einem externen Adressraum; Senden, durch die DMA-Einheit (1), der Instruktionen und Daten jeweils an die Instruktionspuffereinheit und die Datenpuffereinheiten (4);
Lesen, durch die Steuereinheit (3), der Instruktionen aus der Instruktionspuffereinheit; Decodieren, durch die Steuereinheit, der Instruktionen in Mikroinstruktionen; Steuern, durch die Steuereinheit, der DMA-Einheit, einen Daten-IO-Betrieb vorzunehmen; Steuern, durch die Steuereinheit, der Datenverarbeitungsmodule (5), Betriebe vorzunehmen; und Steuern, durch die Steuereinheit, der Datenpuffereinheiten (4), die Daten zu cachen und zu übertragen; und Schreiben, durch die DMA-Einheit (1), von Betriebsergebnissen zurück in den externen Adressraum von den Datenverarbeitungsmodulen (5) und den Datenpuffereinheiten (4).

11. Betriebsverfahren nach Anspruch 9, ferner umfassend:

Puffern, durch die Datenpuffereinheiten (4), von Zwischenergebnissen, die von den Datenverarbeitungsmodulen (5) berechnet werden; und Importieren, durch die Datenpuffereinheiten (4), der Gewichte und Bias von der DMA-Einheit nur einmal während einer Ausführung der Betriebe des neuronalen LSTM-Netzes ohne jede weitere Änderung an den Gewichten und Bias.

12. Betriebsverfahren nach Anspruch 9, wobei die Datenverarbeitungsmodule (5) eine Vektorpunktproduktkomponente, eine Vektoradditionskomponente, eine Vektorsummationskomponente und eine nicht lineare Vektorfunktionsumwandlungskomponente verwenden, um die Betriebe des neuronalen LSTM-Netzes vorzunehmen.

13. Betriebsverfahren nach Anspruch 9, wobei die nicht lineare Vektorfunktionsumwandlungskomponente einen Funktionsbetrieb durch Nachschlagen in einer Tabelle vornimmt.

14. Betriebsverfahren nach einem der Ansprüche 10 bis 13, ferner umfassend:

Teilen, durch jedes der Datenverarbeitungsmodule (5), der Gewichte und der Eingangsdaten in den entsprechenden Datenpuffereinheiten (4) in einige Abschnitte, wobei eine Anzahl von Gewichten oder Eingangsdaten jedes Abschnitts gleich ist einer Anzahl von Betrieben von Vektorbetriebseinheiten der entsprechenden Datenverarbeitungsmodule (5); und

Senden, durch die Steuereinheit, eines Abschnitts von Gewichten und Eingangsdaten von den Datenpuffereinheiten (4) an die entsprechenden Datenverarbeitungsmodule (5), um durch Berechnen eine Teilsumme zu erhalten; Abrufen, durch die Steuereinheit, der erhaltenen Teilsumme aus den Datenpuffereinheiten (4) und dann Senden an die Datenverarbeitungsmodule (5), so dass die Datenverarbeitungsmodule (5) eine Vektoraddition an der Teilsumme vornehmen können, um eine neue Teilsumme zu erhalten; und Senden, durch die Steuereinheit, der neuen Teilsumme an die Datenpuffereinheiten (4), wobei ein Initialwert der Teilsumme ein Biaswert ist;

nachdem alle Eingangsdaten einmal an die Datenverarbeitungsmodule (5) gesendet wurden, die erhaltene Teilsumme ist ein Nettoaktivierungsbetrag, der einem Neuron entspricht und der dann an das Datenverarbeitungsmodul (5) gesendet wird, um einen Ausgangswert des Neurons durch eine nicht lineare Funktionstransformation, d.h. eine tanh-oder Sigmoid-Funktionstransformation, in einem Datenbetriebs-Submodul zu erhalten; so dass, unter Verwendung verschiedener Gewichte und Bias, Vektorwerte des Vergessgates, des Eingangsgates, des Ausgangsgates und der Kandidatenzustandszelle in dem neuronalen LSTM-Netz jeweils berechnet werden können;

jedes Datenverarbeitungsmodul (5) bestimmt, ob die Berechnungen von Vektorwerten eines aktuellen Vergessgates, Eingangsgates und einer Kandidatenzustandszelle vollendet wurden, und wenn ja, nimmt eine Berechnung einer neuen Zustandszelle vor, das heißt, Senden der Vektorwerte der vorherigen Zustandszelle und des Vergessgates an die Datenverarbeitungseinheit, um die Teilsumme durch die Vektorpunktmultiplikationsmittel zu erhalten, wo die Teilsumme an die Datenpuffereinheit (4) zurückgesendet wird, und dann Senden der Werte der Kandidatenzustandszelle und des Eingangsgates an die Datenverarbeitungseinheit, um eine weitere Teilsumme durch die Vektorpunktmultiplikationsmittel zu erhalten; Senden der Teilsumme in der Datenpuffereinheit (4) an das Datenverarbeitungsmodul (5), um eine aktualisierte Zustandszelle durch das Vektorsummations-Submodul zu erhalten, die dann an die Datenpuffereinheit (4) zurückgesendet wird; und dabei Transformieren der aktualisierte Zustandszelle in dem Datenverarbeitungsmodul (5) durch eine nicht lineare Transformationsfunktion tanh; wobei jedes Datenverarbeitungsmodul (5) bestimmt, ob die Berechnung einer nicht linearen Transformation an einer aktuellen aktualisierten Datenzustandszelle und die Berechnung des Ausgangsgates vollendet sind, und wenn ja, Aussetzen des Ausgangsgates und des nicht linearen transformierten Vektors der aktualisierten Datenzustandszelle den Vektorpunktmultiplikationsmitteln, um einen Endwert zu berechnen, der in die Datenpuffereinheit (4) zurückgeschrieben wird.

15. Betriebsverfahren nach Anspruch 9, ferner umfassend:
Vornehmen, durch jedes der Datenverarbeitungsmodule (5), eines Vektorbetriebs durch die Berechnung von Vektorwerten des Vergessgates, des Eingangsgates, des Ausgangsgates und der Kandidatenzustandszelle in dem Betrieb des LSTM-Netzes; Erhalten, durch jedes der Datenverarbeitungsmodule (5), eines Ausgangswerts jedes Datenverarbeitungsmoduls (5) gemäß den Vektorwerten; und Spleißen, durch jedes der Datenverarbeitungsmodule (5), der Ausgangswerte der Datenverarbeitungsmodule (5), um einen Endausgangswert zu erhalten.

16. Betriebsverfahren nach Anspruch 9, wobei, wenn ein nächster Betrieb einen Wert eines Betriebs erfordert, der nicht vollendet ist, bestimmt wird, dass eine Datenabhängigkeit vorhanden ist, und ansonsten bestimmt wird, dass keine Datenabhängigkeit vorhanden ist.

**Revendications**

1. Appareil d'exécution d'opérations de réseau neuronal de mémoire à long et court terme, LSTM, comprenant :

une pluralité d'unités de tampon de données (4) agencées en parallèle pour mettre en mémoire tampon des données, des états et des résultats requis pour les opérations de réseau neuronal LSTM ; et
une pluralité de modules de traitement de données (5) agencés en parallèle, configurés pour obtenir des données d'entrée, des pondérations et des biais requis pour les opérations, venant des unités de tampon de données (4) correspondantes, pour exécuter les opérations de réseau neuronal LSTM, dans lequel la pluralité de modules de traitement de données (5) correspond un à un aux unités de tampon de données (4) ;
l'appareil étant **caractérisé en ce que**
chaque module de traitement de données (5) comprend un sous-module de commande de traitement de données (51), un sous-module de détermination de dépendance des données (52) et un sous-module d'opérations de données (53) ;

dans lequel le sous-module d'opérations de données (53) est configuré pour exécuter des opérations de données ;

dans lequel le sous-module de commande de traitement de données (51) est configuré pour commander les opérations de données exécutées par le sous-module d'opérations de données (53) et commander le sous-module de détermination de dépendance des données (52) à déterminer si oui ou non une opération en cours présente une dépendance des données ;

dans lequel le sous-module d'opérations de données (53) comprend des registres R1, R2, R3, R4 et R5, respectivement, indiquant si une opération d'une porte d'entrée, d'une porte d'oubli, d'une porte de sortie, d'une cellule d'état candidate et d'une transformation de fonction tanh sur une cellule d'état mise à jour, est terminée ;

dans lequel une valeur non zéro de n'importe lequel des registres R1, R2, R3, R4 et R5 indique que l'opération correspondante est terminée, et une valeur zéro du registre indique que l'opération correspondante n'est pas terminée ;

dans lequel le sous-module de détermination de dépendance des données (52) est configuré pour déterminer s'il y a une dépendance des données dans le sous-module d'opérations de données (53) deux fois, comprenant

1) de déterminer s'il y a une dépendance des données parmi la porte d'entrée, la porte de sortie et la cellule d'état candidate lors du calcul d'une nouvelle cellule d'état, en se basant sur si oui ou non les valeurs des registres R1, R3 et R4 sont toutes non zéro, et

2) pour déterminer si oui ou non il y a une dépendance des données entre la porte de sortie et la transformation de fonction tanh sur la cellule d'état mise à jour lors du calcul d'une valeur de sortie, en en se basant sur si oui ou non les valeurs des registres R2 et R5 sont toutes deux non zéro.

2. Appareil selon la revendication 1, comprenant en outre une unité d'accès direct en mémoire (DMA) (1), une unité de tampon d'instructions (2) et une unité de commande (3), dans lequel

l'unité DAM (1) est configurée pour obtenir des instructions et des données requises pour les opérations de réseau neuronal LSTM à partir d'un espace d'adresse externe, envoyer les instructions et les données à l'unité de tampon d'instructions et aux unités de tampon de données (4), respectivement, et écrire les résultats d'opération vers l'espace d'adresse externe à partir des modules de traitement de données (5) et des unités de tampon de données (4) ;

l'unité de tampon d'instructions (2) est configurée pour mettre en tampon des instructions obtenues par l'unité DMA à partir de l'espace d'adresse externe et entrer les instructions sur l'unité de commande ; et

l'unité de commande (3) est configurée pour lire les instructions venant de l'unité de tampon d'instructions et décoder les instructions en micro-instructions, commander l'unité DMA à exécuter une opération IO de données, commander les modules de traitement de données (5) à exécuter des opérations et commander les unités de tampon de données (4) à mettre en tampon et transmettre les données.

3. Appareil selon la revendication 1, dans lequel les unités de tampon de données (4) sont en outre configurées pour mettre en tampon des résultats intermédiaires calculés par les modules de traitement de données (5), et importer les pondérations et biais de l'unité DMA une fois seulement pendant une exécution des opérations de réseau neuronal LSTM sans autre changement sur les pondérations et les biais.

4. Appareil selon la revendication 1, dans lequel les modules de traitement de données (5) utilisent une composante de produit de points vectoriels, une composante d'addition de vecteurs, une composante de somme de vecteurs et une composante de conversion de fonction non linéaire vectorielle pour exécuter les opérations de réseau neuronal LSTM.

5. Appareil selon la revendication 4, dans lequel la composante de conversion de fonction non linéaire vectorielle exécute une opération de fonction en consultant un tableau.

6. Appareil selon l'une quelconque des revendications 2-5, dans lequel chacun des modules de traitement de données (5) est configuré pour diviser les pondérations et les données d'entrée dans les unités de tampon de données (4) correspondantes en plusieurs parties, dans lequel un nombre de pondérations ou de données d'entrée de chaque partie est égal à un nombre d'opérations d'unités d'opérations vectorielles des modules de traitement de données (5) correspondants ; et

l'unité de commande est en outre configurée pour envoyer une partie de pondérations et de données d'entrée venant des unités de tampon de données (4) vers les modules de traitement de données (5) correspondants pour obtenir une somme partielle en calculant, puis en récupérant la somme partielle obtenue des unités de tampon de données (4) puis envoyer vers les modules de traitement de données (5) de façon à ce que les modules de traitement de données (5) puissent exécuter une addition de vecteurs sur la somme partielle pour obtenir une nouvelle somme partielle ; puis l'unité de commande est en outre configurée pour envoyer la nouvelle somme partielle aux unités de tampon de données (4), dans lequel une valeur initiale de la somme partielle est une valeur de biais ;

une fois que toutes les données d'entrée ont été envoyées au module de traitement de données (5) une fois, la somme partielle obtenue est une quantité d'activation nette correspondant à un neurone, qui est ensuite envoyée vers le module de traitement de données (5) pour obtenir une valeur de sortie du neurone par une transformation de fonction non linéaire, c'est-à-dire une transformation de fonction tanh ou sigmoïde, dans un sous-module d'opérations de données ;

de telle façon qu'en utilisant différents pondérations et biais, des valeurs de vecteur de la porte d'oubli, de la porte d'entrée, de la porte de sortie et de la cellule d'état candidate dans le réseau neuronal LSTM peuvent être calculées respectivement ;

chaque module de traitement de données (5) est configuré pour déterminer si oui ou non les calculs des valeurs de vecteurs d'une porte d'oubli, porte d'entrée et cellule d'état candidate actuelle ont été terminés, et si oui, exécuter un calcul de la nouvelle cellule d'état, c'est-à-dire, envoyer les valeurs de vecteurs de la cellule d'état et de la porte d'oubli précédentes à l'unité de traitement de données pour obtenir la somme partielle par le moyen de multiplication de points vectoriels, où la somme partielle est renvoyée vers l'unité de tampon de données (4), puis envoyer les valeurs de la cellule d'état candidate et de la porte d'entrée vers l'unité de traitement de données pour obtenir une autre somme partielle par le moyen de multiplication de points vectoriels ; envoyer la somme partielle dans l'unité de tampon de données (4) vers le module de traitement de données (5) pour obtenir une cellule d'état mise à jour par le sous-module de somme vectorielle qui est ensuite renvoyée vers l'unité de tampon de données (4) ; et pendant ce temps, transformer la cellule d'état mise à jour dans le module de traitement de données (5) par une tanh de fonction de transformation non linéaire ; chaque module de traitement de données (5) est configuré pour déterminer si oui ou non le calcul d'une transformation non linéaire sur une cellule d'état de données mise à jour et le calcul de la porte de sortie sont terminés, et si oui, soumettre la porte de sortie et le vecteur transformé non linéaire de la cellule d'état de données mise à jour au moyen de multiplication de points vectoriels pour calculer une valeur finale qui est écrite vers l'unité de tampon de données (4).

**7.** Appareil selon la revendication 1, dans lequel chacun des modules de traitement de données (5) effectue une opération vectorielle en calculant des valeurs de vecteurs de la porte d'oubli, de la porte d'entrée, de la porte de sortie et de la cellule d'état candidate dans l'opération du réseau LSTM, puis obtient une valeur de sortie de chaque module de traitement de données (5) selon les valeurs de vecteur, et enfin joint les valeurs de sortie des modules de traitement de données (5) pour obtenir une valeur de sortie finale.

**8.** Appareil selon la revendication 1, dans lequel si une opération suivante requiert une valeur d'une opération qui n'est pas terminée, il est déterminé qu'il y a dépendance des données, sinon, il est déterminé qu'il n'y a pas de dépendance des données.

**9.** Procédé opérationnel d'un réseau neuronal de mémoire à long et court terme, LSTM, appliqué à un appareil d'exécution d'opérations de réseau neuronal LSTM, dans lequel l'appareil d'opérations de réseau neuronal LSTM inclut une pluralité d'unités de tampon de données (4) agencées en parallèle et une pluralité de modules de traitement de données (5) correspondant un à un aux unités de tampon de données (4) ; dans lequel chaque module de traitement de données (5) comprend un sous-module de commande de traitement de données (51), un sous-module de détermination de dépendance des données (52) et un sous-module d'opérations de données (53) ; et

dans lequel le sous-module d'opérations de données (53) comprend des registres R1, R2, R3, R4 et R5, respectivement, indiquant si une opération d'une porte d'entrée, d'une porte d'oubli, d'une porte de sortie, d'une cellule d'état candidate et d'une transformation de fonction tanh sur une cellule d'état mise à jour, est terminée ; dans lequel une valeur non zéro de n'importe lequel des registres R1, R2, R3, R4 et R5 indique que l'opération correspondante est terminée, et une valeur zéro du registre indique que l'opération correspondante n'est pas terminée ; le procédé d'opérations comprenant :

d'obtenir, par un module de traitement de donnée cibles, des données d'entrée, des pondérations et des biais requis pour des opérations venant des unités de tampon de données (4) correspondantes pour exécuter les opérations de réseau neuronal LSTM ;

de mettre en tampon des résultats d'opérations sur les unités de tampon de données (4) correspondantes ;

dans lequel le module de traitement de données cibles est n'importe lequel des modules de traitement de données (5) ;

le procédé comprenant en outre :

le sous-module d'opérations de données (53) exécutant des opérations de données ;

le sous-module de commande de traitement de données (51) commandant les opérations de données exécutées par le sous-module d'opérations de données (53), et

de commander le sous-module de détermination de dépendance des données (52) à déterminer si oui ou non une opération en cours présente une dépendance des données ;

le sous-module de détermination de dépendance des données (52) déterminant s'il y a une dépendance des données dans le sous-module d'opérations de données (53) deux fois, comprenant

1) de déterminer s'il y a une dépendance des données parmi la porte d'entrée, la porte de sortie et la cellule d'état candidate lors du calcul d'une nouvelle cellule d'état, en se basant sur si oui ou non les valeurs des registres R1, R3 et R4 sont toutes non zéro, et

2) pour déterminer si oui ou non il y a une dépendance des données entre la porte de sortie et la transformation de fonction tanh sur la cellule d'état mise à jour lors du calcul d'une valeur de sortie, en en se basant sur si oui ou non les valeurs des registres R2 et R5 sont toutes deux non zéro.

**10.** Procédé d'opérations selon la revendication 9, dans lequel l'appareil d'opérations de réseau neuronal LSTM inclut en outre une unité de DMA (1), une unité de tampon d'instructions (2) et une unité de commande (3), et le procédé d'opérations comprend en outre :

d'obtenir, par l'unité DAM (1), des instructions et des données requises pour les opérations de réseau neuronal LSTM à partir d'un espace d'adresse externe, d'envoyer, par l'unité DAM (1), les instructions et les données à l'unité de tampon d'instructions et aux unités de tampon de données (4), respectivement, et

de lire, par l'unité de commande (3), les instructions venant de l'unité de tampon d'instruction ; de décoder, par l'unité de commande, les instructions en micro-instructions ; de commander, par l'unité de commande, l'unité de DMA à exécuter une opération IO de données ; de commander, par l'unité de commande, les modules de traitement de données (5) à exécuter des opérations ; et de commander, par l'unité de commande, les unités de tampon de données (4) à mettre en cache et transmettre les données ; et

d'écrire, par l'unité DAM (1), les résultats d'opération vers l'espace d'adresse externe à partir des modules de traitement de données (5) et des unités de tampon de données (4).

**11.** Procédé opérationnel selon la revendication 9, comprenant en outre :

de mettre en tampon, par les unités de tampon de données (4), des résultats intermédiaires calculés par les modules de traitement de données (5) ; et

d'importer, par les unités de tampon de données (4), les pondérations et les biais venant de l'unité de DMA une fois seulement pendant une exécution des opérations de réseau neuronal LSTM sans autre changement sur les pondérations et les biais.

**12.** Procédé opérationnel selon la revendication 9, dans lequel les modules de traitement de données (5) utilisent une composante de produit de points vectoriels, une composante d'addition de vecteurs, une composante de somme de vecteurs et une composante de conversion de fonction non linéaire vectorielle pour exécuter les opérations de réseau neuronal LSTM.

**13.** Procédé opérationnel selon la revendication 9, dans lequel la composante de conversion de fonction non linéaire vectorielle exécute une opération de fonction en consultant un tableau.

**14.** Procédé opérationnel selon l'une quelconque des revendications 10-13, comprenant en outre :

de diviser, par chacun des modules de traitement de données (5), les pondérations et les données d'entrée dans les unités de tampon de données (4) correspondantes en plusieurs parties, dans lequel un nombre de pondérations ou de données d'entrée de chaque partie est égal à un nombre d'opérations d'unités d'opérations vectorielles des modules de traitement de données (5) correspondants ; et

d'envoyer, par l'unité de commande, d'une partie de pondérations et de données d'entrée venant des unités de tampon de données (4) vers les modules de traitement de données (5) correspondants pour obtenir une somme partielle en calculant ; de récupérer, par l'unité de commande, la somme partielle obtenue venant des unités de tampon de données (4) puis d'envoyer vers les modules de traitement de données (5) de façon à ce que les modules de traitement de données (5) puissent exécuter une addition de vecteurs sur la somme partielle pour obtenir une nouvelle somme partielle ; et d'envoyer, par l'unité de commande, la nouvelle somme partielle aux unités de tampon de données (4), dans lequel une valeur initiale de la somme partielle est une valeur de biais ;

une fois que toutes les données d'entrée ont été envoyées au module de traitement de données (5) une fois, la somme partielle obtenue est une quantité d'activation nette correspondant à un neurone, qui est ensuite envoyée vers le module de traitement de données (5) pour obtenir une valeur de sortie du neurone par une transformation de fonction non linéaire, c'est-à-dire une transformation de fonction tanh ou sigmoïde, dans un sous-module d'opérations de données ; de telle façon qu'en utilisant différents pondérations et biais, des valeurs de vecteur de la porte d'oubli, de la porte d'entrée, de la porte de sortie et de la cellule d'état candidate dans le réseau neuronal LSTM puissent être calculées respectivement ;

chaque module de traitement de données (5) déterminant si oui ou non les calculs des valeurs de vecteurs d'une porte d'oubli, porte d'entrée et cellule d'état candidate actuelle ont été terminés, et si oui, exécutant un calcul d'une nouvelle cellule d'état, c'est-à-dire, envoyant les valeurs de vecteurs de la cellule d'état et de la porte d'oubli précédentes à l'unité de traitement de données pour obtenir la somme partielle par le moyen de multiplication de points vectoriels, où la somme partielle est renvoyée vers l'unité de tampon de données (4), puis envoyant les valeurs de la cellule d'état candidate et de la porte d'entrée vers l'unité de traitement de données pour obtenir une autre somme partielle par le moyen de multiplication de points vectoriels ; envoyant la somme partielle dans l'unité de tampon de données (4) vers le module de traitement de données (5) pour obtenir une cellule d'état mise à jour par le sous-module de somme vectorielle qui est ensuite renvoyée vers l'unité de tampon de données (4) ; et pendant ce temps, transformant la cellule d'état mise à jour dans le module de traitement de données (5) par une tanh de fonction de transformation non linéaire ; chaque module de traitement de données (5) déterminant si oui ou non le calcul d'une transformation non linéaire sur une cellule d'état de données mise à jour et le calcul de la porte de sortie sont terminés, et si oui, soumettant la porte de sortie et le vecteur transformé non linéaire de la cellule d'état de données mise à jour au moyen de multiplication de points vectoriels pour calculer une valeur finale qui est écrite vers l'unité de tampon de données (4).

**15.** Procédé d'opérations selon la revendication 9, comprenant en outre
d'exécuter, par chacun des modules de traitement de données (5), une opération vectorielle en calculant des valeurs de vecteurs de la porte d'oubli, de la porte d'entrée, de la porte de sortie et de la cellule d'état candidate dans l'opération du réseau LSTM, puis d'obtenir, par chacun des modules de traitement de données (5), une valeur de sortie de chaque module de traitement de données (5) selon les valeurs de vecteur, et enfin de joindre, par chacun des modules de traitement de données (5), les valeurs de sortie des modules de traitement de données (5) pour obtenir une valeur de sortie finale.

**16.** Procédé d'opérations selon la revendication 9, dans lequel si une opération suivante requiert une valeur d'une opération qui n'est pas terminée, il est déterminé qu'il y a dépendance des données, sinon, il est déterminé qu'il n'y a pas de dépendance des données.

1 — Direct memory access unit

2 — Instruction buffer unit

3 — Controller unit

4 — Data buffer unit    4 — Data buffer unit  ...  4 — Data buffer unit

5 — Data processing module    5 — Data processing module  ...  5 — Data processing module

**FIG. 1**

3 — Controller unit

5

51 — Data processing control sub-module

52 — Data dependency determination sub-module

53 — Data operation sub-module

4 — Data buffer unit

**FIG. 2**

S1 — An IO instruction is stored at the starting address of the instruction buffer unit 2 in advance

S2 — The controller unit 3 reads the IO instruction from the starting address of the instruction buffer unit 2, and according to the decoded microinstructions, the direct memory access unit 1 reads all instructions related to the LSTM network calculations from the external address space and has them buffered into the instruction buffer unit 2

S3 — The controller unit 3 reads an IO instruction from the instruction buffer unit 2; according to the decoded microinstructions, the direct memory access unit 1 reads from the designated external address space the weights and biases related to the LSTM network operations, including the weights and biases of the input gate, the output gate, the forget gate, and the candidate state cell, and the weights and biases are divided and read into different data buffer modules 4 according to different neurons corresponding to the weights

S4 — The controller unit 3 reads a state cell initialization instruction from the instruction buffer unit 2, initializes the value of the state cell in the data buffer module 4 according to the decoded microinstructions, and sets the partial sums for the input gate, the output gate, the forget gate, and the candidate state cell to the corresponding neuron bias values

S5 — The controller unit 3 reads an IO instruction from the instruction buffer unit 2; according to the decoded microinstructions, the direct memory access unit 1 reads the input values from the designated external address space into the data buffer units 4; each data buffer unit 4 receives the same input value vector

S6 — The controller unit 3 reads a data processing instruction from the instruction buffer unit 2; according to the decoded microinstructions, the data processing module 5 acquires the relevant data required for the operation from the corresponding data buffer unit 4 for operations, the operation results are the output values of a part of the neurons corresponding to one time point, and the output values obtained from all the data processing modules 5, after combination, correspond to an output value for the one time point. Please refer to FIG. 4 for the detailed processing procedure. After the processing is finished, the data processing module 5 stores the processed intermediate values or output values and the states cell values into the data buffer units 4

S7 — The controller unit 3 reads an IO instruction from the instruction buffer unit 2; according to the decoded microinstructions, the output values in the data buffer unit 4 are spliced together and outputted to the designated external address through the direct memory access unit 1

S8 — The controller unit 3 reads a determination instruction from the instruction buffer unit 2; according to the decoded microinstructions, the controller unit 3 decides whether the current forward process is completed, and if the current forward process is completed, the operation ends. If the current forward process is not completed, the flow proceeds to S6 to continue

**FIG. 3**

S1 — The data processing module 5 reads the weights and input values of a part of the input gates from the data buffer unit 4

S2 — The data processing control sub-module 51 in the data processing module 5 controls the vector point-multiplication means in the data operation sub-module 53 to calculate a point-multiplication of the weight of the input gate and the input value, and then, performs grouping according to different neurons to which the result belongs, and subjects the point - multiplication results in the group to the vector summation means in the data operation sub-module 53 to calculate a partial sum

S3 — The data processing module 5 reads the partial sum for the input gate from the data buffer unit 4

S4 — The data processing control sub-module 51 in the data processing module 5 controls the data operation sub-module 53 to add the calculated partial sum with the newly read partial sum to obtain the updated partial sum for the input gate

S5 — The data processing module 5 writes the updated partial sum into the data buffer module 4

S6 — The data processing module 5 determines whether the weights for all the input gate have been operated once. If so, the partial sum in the data buffer unit is the value of the input gate, and the register R1 is set to be non-zero. Otherwise, the flow proceeds to step S1 to continue with a part of weights and input values of a different input value

S7 — The output values of the forget gate, the output gate, and the candidate state cell obtained by the operation method are used, and the R2, R3, and R4 are set to non-zero, and the output values are all written back into the data buffer unit 4

S8 — The data processing control sub-module 51 in the data processing module 5 controls the data dependency determination sub-module 52 to determine whether operations among the forget gate, the input gate, and the candidate state cell are completed, that is, whether R1, R2, and R4 are all non-zero. If no, the data processing control sub-module 51 controls the data operation sub-module 53 to perform a null operation, and then proceeds to step S8 to continue; if yes, the flow proceeds to step S9

S9 — The data processing module 5 reads the old state cell and the output value of the forget gate from the data buffer unit 4

S10 — The data processing control sub-module 51 in the data processing module 5 controls the data operation sub-module 53 to calculate a partial sum on the old state cell and the output value of the forget gate by the vector point-multiplication means

S11 — The data processing module 5 reads the candidate state cell and the output value of the input gate from the data buffer unit 4

A

```
( A )
```

**S12** — The data processing control sub-module 51 in the data processing module 5 controls the data operation sub-module 53 to calculate a partial sum on the candidate state cell and output value of the input gate by the vector point-multiplication means, and subject the partial sum and the partial sum calculated in step S10 to the vector addition means so as to calculate an updated state cell

**S13** — The data processing module 5 sends the updated states cell back to the data buffer unit 4

**S14** — The data processing control sub-module 51 in the data processing module 5 controls the data operation sub-module 53 to calculate a transformed value of the state cell by a nonlinear transformation function tanh from the updated state cell with the vector nonlinear transformation means, and sets R5 to non-zero

**S15** — The data processing control sub-module 51 in the data processing module 5 controls the data dependency determination sub-module 52 to determine whether the calculation of output value of the output gate and that of the transformed value of the state cell by the nonlinear transformation function tanh are completed, that is, whether R3 and R5 are both non-zero. If no, the data processing control sub-module 51 controls the data operation sub-module 53 to perform a null operation, then the flow proceeds to step S15 to continue; if yes, the flow proceeds to S16

**S16** — The data processing module 5 reads the output of the output gate from the data buffer unit 4

**S17** — The data processing control sub-module 51 in the data processing module 5 controls the data operation sub-module 53 to subject the output value of the output gate and the transformed value of the state cell by the nonlinear transformation function tanh to the vector point-multiplication means, so as to calculate an output value, i.e., the output value in the neuron in the LSTM network corresponding to the data processing module 5

**S18** — The data processing module 5 writes the output value into the data buffer unit 4

**FIG. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016210014 A1

**Non-patent literature cited in the description**

- **JOSE PEDRO et al.** *FPGA implementation of a LSTM Neural Network,* 25 July 2016